# EUROPEAN PATENT SPECIFICATION

(11) **EP 4 019 217 B1**
(45) Date of publication and mention of the grant of the patent: **04.02.2026**
(21) Application number: 21214074.3
(22) Date of filing: 13.12.2021
(51) Int. Cl.: B27L 5/02, B27M 1/00, B23B 21/00, B27D 1/04

(54) **A METHOD FOR MANUFACTURING A PLYWOOD BOARD AND A PLYWOOD BOARD**
VERFAHREN ZUR BEHANDLUNG EINER SPERRHOLZPLATTE SOWIE SPERRHOLZPLATTE
PROCÉDÉ DE FABRICATION D'UN PANNEAU DE CONTREPLAQUÉ ET PANNEAU DE CONTREPLAQUÉ

(30) Priority: 22.12.2020 FI 20206361
(43) Date of publication of application: 29.06.2022
(73) Proprietor: UPM Plywood Oy, 15140 Lahti (FI)
(72) Inventor: Koski, Anna, 00100 Helsinki (FI); Koponen, Simo, 00100 Helsinki (FI); Salmikuukka, Sirkku, 00100 Helsinki (FI)
(74) Representative: Berggren Oy

(56) References cited:
- EP-A1- 2 596 925
- EP-A1- 2 705 950
- US-A- 5 662 760

## Description

### Technical field

The invention relates to a method for manufacturing plywood board, according to the preamble of claim 1, and to a plywood board according to the preamble of claim 14. Such a method and such a board are known from the document EP 2 596 925 A1.

### Background

Plywood is manufactured by gluing several wooden veneer sheets on top of each other. During gluing, a preform comprising veneer sheets and adhesive is pressed to bond the veneer sheets to form a flat plywood board from the preform. The veneer sheets of the preform are substantially dry.

The preform is commonly pressed in between two flat plates, whereby the resulting plywood board is flat. However, it has been found that during storage and/or during use, the plywood board may warp.

Warping is not beneficial, since some uses of plywood boards require flatness of the plywood boards. Thus, flat plywood boards that remain flat also during storage and in use are needed. A possible solution is to discard, before use, such boards that are not sufficiently flat. However, as a result, waste is produced. The boards may be discarded e.g. before or during sanding, if the boards are sanded. In addition the boards may be discarded after storage, just before use. As an example, approximately 1 % of plywood boards may be discarded at one or both phases.

### Summary

An aim of the present solution is to present a plywood board that warps, during storage and/or in use, less than a known plywood board. An aim of the present solution is to present a method for manufacturing such a plywood board.

It has been found that the warping is caused by moisture absorbed by the plywood board. Moreover, moisture, when absorbed by the plywood board, causes the veneer sheets of the plywood board to swell. In theory, plywood is reasonably isotropic because of the different grain directions of different veneer layers, which are directed directly towards a length or a width of the plywood board. However, it has been found, that in practice the wood material comprises also skewed grains, i.e. grains of which direction is neither longitudinal nor transverse, but somewhere in between. It has been found that the skewed grains cause warping of the plywood board. Discarding individual veneer sheets, of which skewness is too high, might be a solution. However, a lot of waste would still be produced.

It has also been found that the skewed grains can be cut by incising (i.e. tenderizing) the wooden veneer material of the plywood board. It has also been found that forming the plywood board using veneer material, wherein at least some of the skewed grains have been cut by incising, the tendency for warping is diminished.

### Brief description of the drawings

- Fig. 1a: shows a plywood board in a perspective view,
- Fig. 1b: shows a plywood board having five veneer sheets in a side view,
- Fig. 1c: shows a plywood board having six veneer sheets in a side view,
- Fig. 1d: shows a plywood board having seven veneer sheets in a side view,
- Fig. 2a: shows a plywood board having five veneer sheets in a side view and in an exploded view together with some angles,
- Fig. 2b: shows a plywood board having two surface veneer sheets that have not been incised,
- Fig. 2c: shows a plywood board having at least two core veneer sheets that have been incised,
- Fig. 2d: shows a plywood board having seven core veneer sheets of which such veneer sheets that have a grain direction substantially perpendicular to the grain direction of a surface veneer sheet have been incised,
- Fig. 2e: shows a veneer sheet made of parts,
- Fig. 2f: shows a veneer sheet made of parts,
- Fig. 3a: shows a method for manufacturing a plywood board, wherein at least a part of the material of the first veneer web is incised, when the material is in the form of veneer sheets,
- Fig. 3b: shows producing a first or a second veneer web from a first or a second log, respectively,
- Fig. 3c: shows a method for manufacturing a plywood board, wherein at least a part of the material of the first veneer web is incised, when the material is in the form of the veneer web, and the veneer web is subsequently dried,
- Fig. 3d: shows a method for manufacturing a plywood board, wherein at least a part of the material of the first veneer web is incised, when the material is in the form of the veneer web, and the material of the veneer web is subsequently dried in the form of veneer sheets,
- Fig. 3e: shows a method for manufacturing a plywood board, wherein at least a part of the material of the first veneer web is incised by bending, when the material is in the form of the veneer web,
- Fig. 3f: shows a method for manufacturing a plywood board, wherein at least a part of the material of the first veneer web is incised by bending, when the material is in the form of veneer sheets,
- Fig. 4a: shows in detail and in a side view peeling the veneer web from a log,
- Fig. 4b: shows in a side view a preform for a plywood board, wherein none of the veneer sheets has been turned upside down,
- Fig. 4c: shows in a top view grain directions of the surface veneer sheets of the preform of Fig. 4b,
- Fig. 4d: shows in a top view grain directions of two surface veneer sheets before turning one of them upside down,
- Fig. 4e: shows in a top view grain directions of the two surface veneer sheets of Fig. 4d after turning one of them upside down,
- Fig. 4f: shows in a side view a preform for a plywood board, wherein one of the surface veneer sheets has been turned upside down,
- Fig. 4g: shows in a side view a preform for a plywood board, wherein one of the surface veneer sheets has been turned upside down,
- Fig. 5a: shows in a side view incising a veneer web,
- Fig. 5b: shows in a top view incising a veneer web with axial blades, the veneer web having skewed grains,
- Fig. 5c: shows in a top view incising a veneer web with non-axial blades, the veneer web having skewed grains,
- Fig. 5d: shows in a side view incising a veneer web and penetration of blades into the veneer web,
- Fig. 6a: shows a method for manufacturing a plywood board, wherein a skewness of veneer material, as part of a veneer web, is determined, and the veneer material is incised when the skewness exceeds a limit,
- Fig. 6b: shows a method for manufacturing a plywood board, wherein a skewness of veneer material, as part of a veneer web, is determined, and the veneer material is not incised when the skewness is below a limit,
- Fig. 6c: shows a method for manufacturing a plywood board, wherein skewnesses of veneer material, as part of a veneer web, are determined, and such veneer material of which skewness exceeds a limit is incised and such veneer material of which skewness is below the limit is not incised,
- Fig. 6d: shows a method for manufacturing a plywood board, wherein skewnesses of veneer sheets are determined, a veneer sheet is incised when its skewness exceeds a limit, and a veneer sheet is not incised when its skewness is below the limit,
- Fig. 6e: shows a method for manufacturing a plywood board, wherein veneer sheets that do not comprise skewed grains bypass an incising part of an incision device,
- Fig. 6f: shows a method for manufacturing a plywood board, wherein a quality of each veneer sheet is automatically detected and the veneer sheets are classified according to their quality,
- Fig. 7a: shows incising a veneer with a plane in an experiment, and
- Fig. 7b: shows punctuating a veneer with a spike in an experiment.

### Detailed description

The following reference numerals and symbols are used and shown in the figures:
- 100: a plywood board,
- 120: adhesive,
- 132: a first surface of the plywood board,
- 134: a second surface of the plywood board,
- 200: a veneer sheet (in general),
- 200a, 200b, 200c: a veneer sheet (in general),
- 211: a primary surface veneer sheet,
- 221: a secondary surface veneer sheet,
- 231: a first primary core veneer sheet, adjacent to the primary surface veneer sheet 211,
- 232: a second primary core veneer sheet, adjacent to the first primary core veneer sheet 231,
- 232a: a part of the second primary core veneer sheet,
- 232b: a part of the second primary core veneer sheet,
- 232c: a part of the second primary core veneer sheet,
- 232d: a part of the second primary core veneer sheet,
- 233: a third primary core veneer sheet, adjacent to the second primary core veneer sheet 232,
- 234: a fourth primary core veneer sheet, adjacent to the third primary core veneer sheet 233,
- 241: a first secondary core veneer sheet, adjacent to the secondary surface veneer sheet 221,
- 242: a second secondary core veneer sheet, adjacent to the first secondary core veneer sheet 241,
- 243: a third secondary core veneer sheet, adjacent to the second secondary core veneer sheet 242,
- 301: a first log,
- 302: a first veneer lathe,
- 304: a knife of the first veneer lathe,
- 306: a pressure bar,
- 311: a first veneer web,
- 312: a first surface (of a veneer web or a veneer sheet),
- 313: a second surface (of a veneer web or a veneer sheet),
- 314: lathe checks,
- 330: a roll, configured to bend veneer material,
- 342: an applicator for applying adhesive,
- 350: a preform for the plywood board,
- 401: a second log,
- 411: a second veneer web,
- 500: a device for incising,
- 510: an incising roll,
- 511: a blade,
- 512: a blade,
- 520: a support roll,
- 552: a first conveyor, for conveying veneer sheets to a bypass passage,
- 554: a second conveyor, for conveying veneer sheets from the bypass passage,
- 610: an optical detector,
- 620: a skewness detector,

- A: an arrow, indicating an orientation of a veneer sheet or veneer web,
- CP: a central plane,
- CPU1: a processor,
- CPU2: a processor,
- DI: direction of an incision or an average direction of incisions,
- del: a depth, of incisions,
- DL: direction of the length L of the plywood board,
- DW: direction of the length W of the plywood board,
- DB: a longitudinal direction of a blade,
- DBa: an average of the direction of the length of a first blade and a direction of the length of a second blade,
- DB511: a longitudinal direction of the blade 511,
- DB512: a longitudinal direction of the blade 512,
- GD: a grain direction,
- G211: a grain direction of the wood material of the veneer 211,
- G221: a grain direction of the wood material of the veneer 221,
- G231: a grain direction of the wood material of the veneer 231,
- G232: a grain direction of the wood material of the veneer 232,
- G233: a grain direction of the wood material of the veneer 233,
- G234: a grain direction of the wood material of the veneer 234,
- G241: a grain direction of the wood material of the veneer 241,
- G242: a grain direction of the wood material of the veneer 242,
- G243: a grain direction of the wood material of the veneer 243,
- I: an incision,
- In: incised,
- L: a length of the plywood board,
- M: a total number of wooden veneer sheets of a plywood board,
- N: an integer number such that M=2N+2 or M=2N+3,
- NI: not incised
- NIR: a non-incised region,
- PD: a primary direction,
- P1: a first passage, for veneer sheets,
- P2: a second passage, for veneer sheets,,
- R1: a first region that is incised,
- R2: a second region, separate from R1, that is incised,
- S1: a first grain region, which may be, and typically is, incised,
- S2: a second grain region, which typically is not incised,
- Sx: a direction,
- Sy: a direction, perpendicular to Sx,
- Sz: a direction, perpendicular to Sx and Sy,
- T: a thickness of the plywood board,
- TV: a thickness, of veneer material,
- W: a width of the plywood board,
- WWEB: a width of a veneer web,

- α1: a first angle, between the grain directions G211, G221 of the surface veneer sheets 211, 221
- α2: a second angle, between the grain directions G211, G231 of the primary surface veneers sheet 211 and the a first primary core veneer sheet 231,
- α3: a third angle, between the grain directions G221, G241 of the secondary surface veneers sheet 221 and the a first secondary core veneer sheet 241,
- α4: a fourth angle, between the grain directions G231 and G232,
- α5: a fifth angle, between the grain directions G241 and G242,
- α6: a sixth angle, between the primary direction PD and a grain direction,
- α7: a seventh angle, between the primary direction PD and a longitudinal direction of a blade,
- α8: an eighth angle, between the primary direction PD and an average direction of the longitudinal directions of the blades,
- β0L: an angle between a direction of the length of the plywood board and an average of longitudinal direction of incisions,
- β0W: an angle between a direction of the width of the plywood board and an average of longitudinal direction of incisions,
- β1: an angle between a direction of the length of the plywood board and a grain direction of a veneer sheet,
- β2: an angle between an average direction of the incision(s) and a grain direction of the wood material of a veneer sheet.

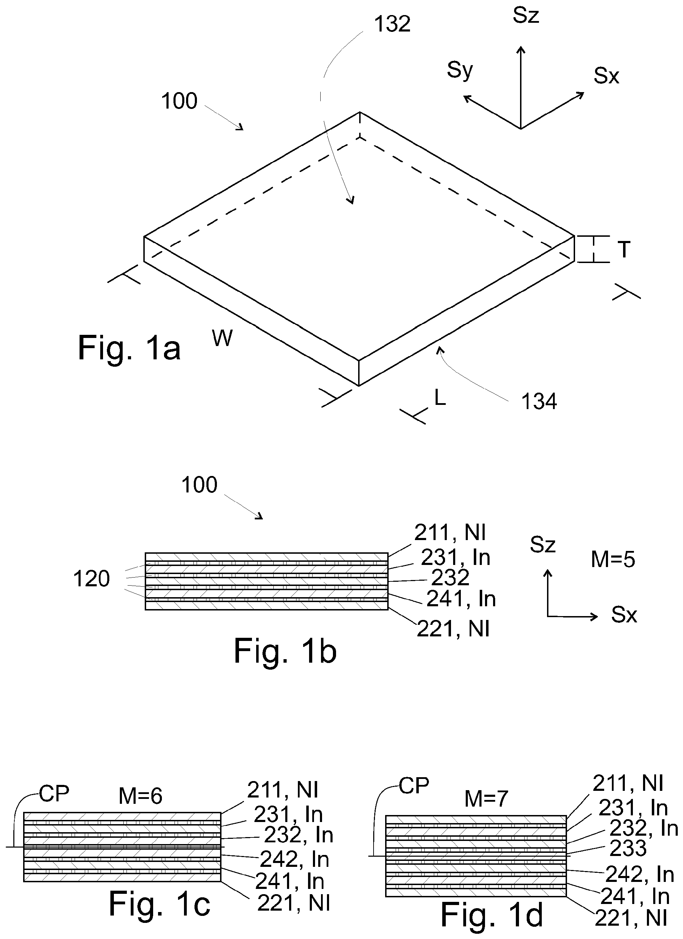

Figure 1a shows a plywood board 100 having a length L, a width W, and a thickness T. Herein the thickness T is smaller than the length L and smaller than the width W. Three orthogonal directions, Sx, Sy, and Sz are shown in Fig. 1a, wherein Sz is parallel (i.e. unidirectional) with a direction of the thickness T. The plywood board 100 has a first surface 132 and an opposite second surface 134. A normal of the first surface 132 is unidirectional (i.e. parallel) with the direction of the thickness T of the plywood board 100. A normal of the second surface 134 is unidirectional with the direction of the thickness T of the plywood board 100. Most often a direction DL of the length L is defined such that it is substantially parallel to a grain direction (G211, G221) of a surface veneer (211, 221) of the plywood board 100. The grain directions (G211, G221) of the surface veneers may be mutually parallel. Thus, oftentimes the length L is less than the width W. This convention derives from the fact that a length of a log (301, 401) is substantially parallel to the grain direction of the wood material.

As detailed in the background, e.g. during storage or in use, the plywood board may warp, whereby it no longer is exactly planar. Warping occurs as cupping or as twisting. In cupping, the first or the second surface of the plywood board becomes concave, the opposite side becoming convex. In twisting, the first and the second surface of the plywood board become saddle surface like surfaces.

Fig. 1b shows, in a side view, a plywood board 100 comprising five veneer sheets 200 (denoted by 211, 231, 232, 241, and 221) and adhesive 120 arranged in between the veneer sheets 200. Hereinbelow, veneer sheets are commonly referred to by the reference numeral 200, when considered feasible. The plywood board 100 comprises a primary surface veneer sheet 211, a secondary surface veneer sheet 221, and at least three core veneer sheets (231, 232, 241) arranged in between the primary surface veneer sheet 211 and the secondary surface veneer sheet 221, the veneer sheets 200 bonded together with adhesive 120. The core veneer sheets are arranged between the surface veneer sheets in the direction of the thickness T of the board 100. As for a definition of the surface veneer sheet, a surface veneer sheet is such a veneer sheet that comprises veneer sheets only on one of its sides. In case the plywood board 100 has not been coated, a surface veneer sheet (211, 221) forms a surface (132, 134) of the plywood board 100. However, a surface veneer sheet may comprise veneer sheets on only one of its side, and other material layer(s) on the other side. Such other material include at least coating material, such as polymerized resins.

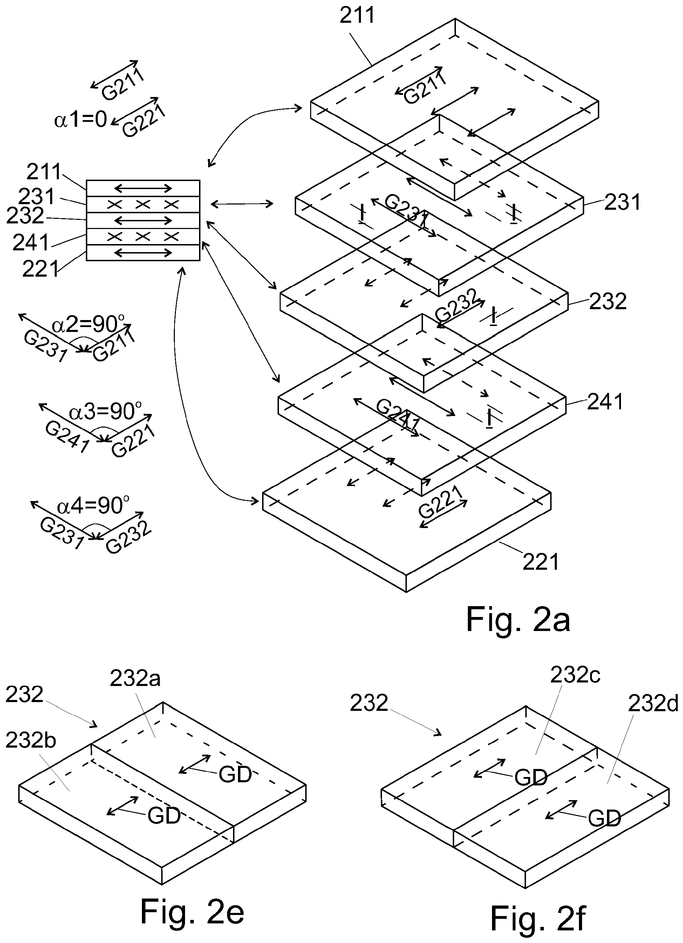

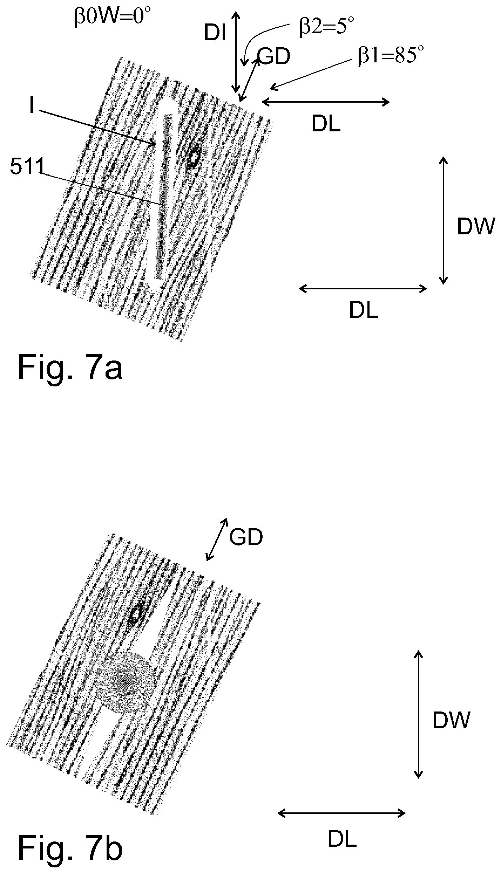

In the embodiment, at least one of the core veneer sheets (231, 232, 241) has been incised. As detailed above, incising has been found to reduce warping of the plywood board 100 during storage and in use. Methods for incising and reasons why warping is reduced by incising will be detailed later. The core veneer sheet that has been incised may have been incised when being a part of a veneer web or after having been cut from the veneer web, i.e. as a veneer sheet. Thus, at least one of the core veneer sheets comprises incisions I. The incisions I are evidence of the material having been incised, as indicated by the letters "In" near the numerals 231 and 241 in Fig. 1b. Such incisions I are shown in Fig. 2a for all the core veneer sheets. An example of an incision is shown also in Fig. 7a.

However, in the embodiment of Fig. 1b, as well as in the claimed invention, neither the primary surface veneer sheet 211 nor the secondary surface veneer sheet 221 has been incised. Neither of them has been incised neither in the veneer web form nor in the veneer sheet form. Thus, both the surface veneer sheets 211, 221 are free from incisions I. Such incisions I are absent from Fig. 2a (see surface veneer sheets 211, 221).The absence of incisions is indicated also in Fig. 1b by the letters "NI" (not incised) near the reference numerals 211 and 221.

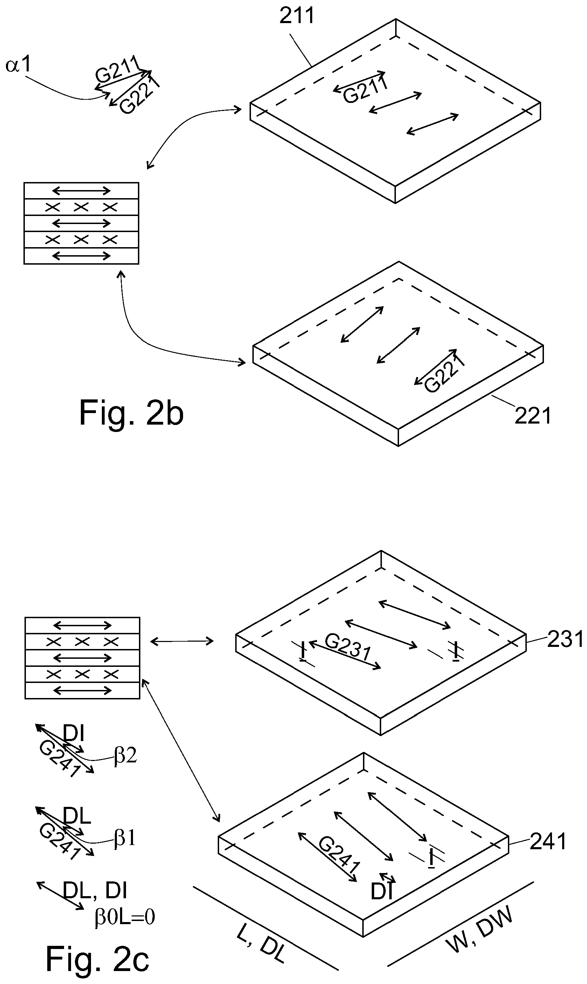

Fig. 2a shows an ideal case, wherein a grain direction G211, G231, G232, G241, G211 of each one of the veneer sheets 211, 231, 232, 241, 221 is parallel to either the length or the width of the veneer sheet. This may occur, when the tree, from which the veneer sheets are made, grows straight. The plywood board may be cross-oriented throughout, as in Fig. 2a, but need not be, as in Fig. 1c. The grain orientations of the veneer sheets is shown by the arrows on the right hand side of Fig. 2a, and as arrow or cross marks on the left hand side of Fig. 2a. On the left hand side of Fig. 2a, the arrow shown in a veneer sheet indicates a grain direction parallel to plane of the figure (sheets 211, 232, and 221), or substantially parallel e.g. in Figs. 2b and 2c, and the cross mark indicates grain direction perpendicular to plane of the figure (sheets 231 and 241), or substantially perpendicular e.g. in Figs. 2b and 2c. The possible deviation from parallel or perpendicular will be explained later.

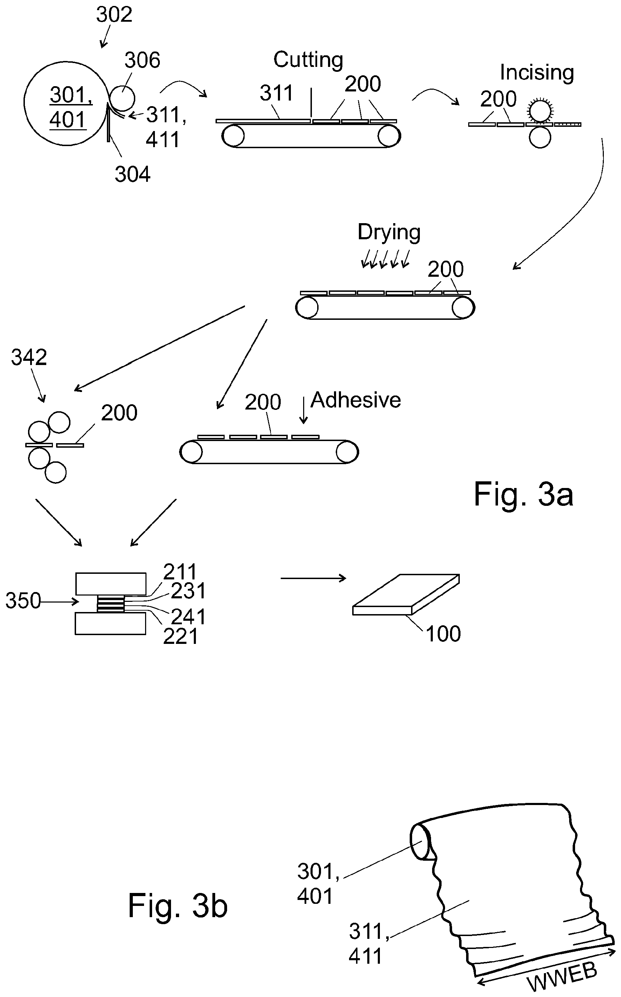

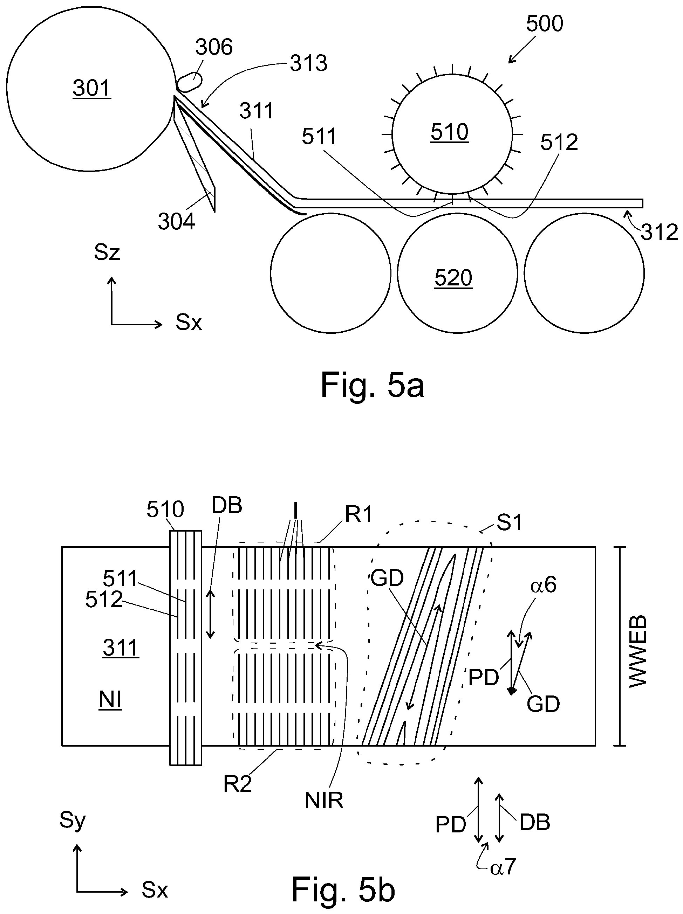

However, the tree, from which the veneer sheets are made, does not always grow straight. In such a case, the grain direction GD of the material of the veneer web 311 is not exactly parallel to a direction of width WWEB of the veneer web 311 (see e.g. Fig. 3b and 5b). However, as detailed above, most commonly, the plywood board is made such that the direction DL of the length L of the board 100 is parallel to the direction of the width WWEB of the veneer web 311 from which the surface veneer sheet is made. Most often, even if the grains are skewed, the angle of skewness (shown by α6 in Fig. 5b) is less than eight degrees. However, a skewness of e.g. at least 3 degrees seems to warp the plywood board. It has been found that the discarded plywood boards (see background), which did not comprise incised veneer material, typically comprised veneer layers, in which the skewness was at least five degrees.

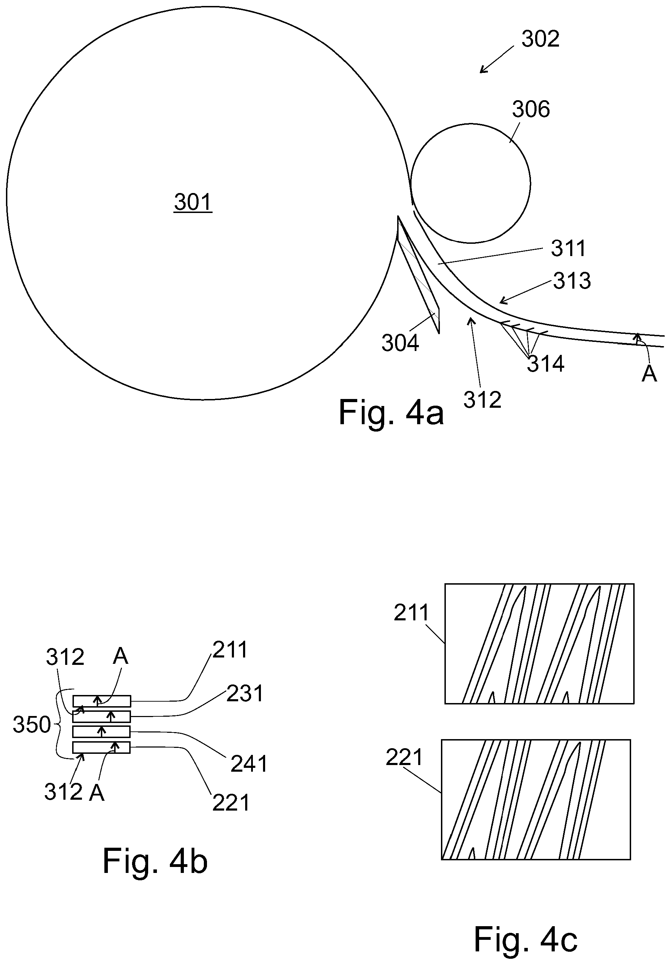

Therefore, and referring to 2b, the grain direction G211 of the primary surface veneer sheet 211 needs not be unidirectional with the length L or the width W. Referring to 2b, the grain direction G221 of the secondary surface veneer sheet 221 needs not be unidirectional with the length or the width. In such a case the grains are skewed, as discussed above. However, also in such a case, the surface veneer sheets 211, 221 are preferably oriented such that a first angle α1, which remains in between these directions, is small. If needed, one of the surface veneer sheets 211, 221 may be turned upside down before pressing the stack of veneer sheets as detailed in connection with Figs. 4b to 4f. It has been found that having a small angle (or no angle at all) between the grain directions of the surface veneer sheets 211, 221 also reduces the tendency of warping.

Referring to Figs. 2a and 2b, in the claimed invention, a first angle α1 between a grain direction G211 of the primary surface veneer sheet 211 and a grain direction G221 of the secondary surface veneer sheet 221 is at most 10 degrees. It has been found that decreasing the first angle α1 decreases the tendency of warping. Moreover, preferably both the grain directions G211 and G221 are substantially parallel to a length L or a width W of the plywood board 100. As detailed above, it is commonplace to define the length such that a direction of the length is parallel to the grain directions G211, G221. More specifically, preferably an angle between the grain direction G211 of the primary surface veneer sheet 211 and a length L of the plywood board is less than 5 degrees or more than 85 degrees. In a similar way, preferably an angle between the grain direction G221 of the secondary surface veneer sheet 221 and a length L of the plywood board is less than 5 degrees or more than 85 degrees. This angle is slightly less than the typical maximum angle for skewness, because typically, the surface veneer sheets are of high quality, whereby their skewness is less than maximum.

Throughout this description, an angle between two directions is defined as the smaller of the two angles of the two straight lines that are parallel to the two directions. Thus, e.g. if an angle between the grain direction G211 and a direction of length L would be 45 degrees, whereby another angle between the grain direction G211 and a direction of length L would be 135 degrees; the smaller one would be neither less than 5 degrees nor greater than 135 degrees. Thus, such a direction would not be substantially parallel to the direction of length or width in the aforementioned meaning.

The primary surface veneer 211 may form the primary surface 132 of the plywood board 100. The secondary surface veneer 221 may form the secondary surface 134 of the plywood board 100. The surface veneers 221, 221 are not incised because many applications require a smooth surface 132, 134 of the board 100, and incisions typically are indentations in the veneer sheets 231, 232, 241. Incisions are also typically not considered visually attractive, and the plywood board is not always coated by with opaque coating. Thus incisions on a surface veneer could deteriorate the visual appearance. Furthermore, as detailed below, the incisions are particularly effective in reducing warpage, when the incisions are formed on a second side 313 of the veneer material, which is opposite to a first side 312 that contains lathe checks 314. Both the incisions and the lathe checks are detrimental for visual appearance. Thus, in such a case the incised veneer sheets do not comprise any visually attractive surfaces. Moreover, for manufacturing reasons it is feasible to incise all the veneer material from the same side(s); or from only the same side, i.e. only from the second side 313.

As for incising, it has been found that the skewed grains of the core veneers, in particular such core veneers that are not central veneers (or the central veneer) are responsible for the warping of the plywood board. This seems to result from the swelling of the veneer material of a veneer sheet adjacent to the skewed grains particularly in the direction that is perpendicular to their grain direction. To elaborate, wood material swells most in a tangential direction, somewhat less in a radial direction, and only negligible in the grain direction. Thus, when the plywood is cross-oriented, as it commonly is, the veneer layers tend to swell in the tangential direction of that layer. If the material was not skewed, the grains of the adjacent layer could resist the swelling; and the cross-structure would cause the internal stress to cancel. However, when the grains of the adjacent layer is skewed, the grains (which do not swell) of the adjacent veneer layer cause internal stress (shear and normal) to the plywood board, which does not cancel out by other internal stress.

Thus, such swelling causes forces inside the board. It has been found that by incising at least such parts of the plywood board, the warping can be reduced. Naturally, incising must be performed before the pressing the preform of the board to form the board. It seems that after breaking the grains, their strength is not sufficient to resist the swelling of the adjacent layers, and thus the strength is not sufficient for causing warping. Moreover, the further away from a central plane CP of the board, the higher the internal torque generated by said stress. Therefore, most preferable, at least such core veneer sheets that are close to the surface veneer sheets 211, 221 have been incised.

Referring to Fig. 1b, in an embodiment, a first primary core veneer sheet 231 is arranged adjacent to the primary surface veneer sheet 211. Herein the term "adjacent" indicates that no other wooden veneer sheet is arranged in between these sheets 211, 231. However, adhesive 120 is arranged in between the adjacent sheets 211, 231. Moreover, a first secondary core veneer sheet 241 is arranged adjacent to the secondary surface veneer sheet 221. Herein the term "adjacent" indicates that no other wooden veneer sheet is arranged in between these sheets 221, 241. However, adhesive 120 is arranged in between the sheets 221, 241. In the embodiment of Fig. 1b, the first primary core veneer sheet 231 has been incised. The presence of incisions, and the fact the material of the sheet has been incised, is indicated in Fig. 1b by the letters "In" (incised) near the reference numeral 231. The first primary core veneer sheet 231 in Fig. 2a also shows incisions I. In the embodiment of Fig. 1b, the first secondary core veneer sheet 241 has been incised. The presence of incisions, and the fact the material of the sheet has been incised, is indicated in Fig. 1b by the letter "In" (incised) near the reference numeral 241. The first secondary core veneer sheet 241 in Fig. 2a also shows incisions I.

Referring to Fig. 2a, the grain direction G211 of the primary surface veneer sheet 211 is typically substantially perpendicular to the grain direction G231 of the first primary core veneer sheet 231. Thus, in an embodiment, a second angle α2 between the grain direction G211 of the primary surface veneer sheet 211 and the grain direction G231 of the first primary core veneer sheet 231 is at least 75 degrees, such as at least 80 degrees. This takes into account the skewness of at most about 8 degrees for both the two veneer sheets 211, 231. In a similar manner on the opposite side of the plywood board 100, the grain direction G221 of the secondary surface veneer sheet 221 is substantially perpendicular to the grain direction G241 of the first secondary core veneer sheet 241. Thus, in an embodiment, a third angle α3 between the grain direction G221 of the secondary surface veneer sheet 221 and the grain direction G241 of the first secondary core veneer sheet 241 is at least 75 degrees, such as at least 80 degrees.

Referring to Fig. 2c, preferably, the incisions I have the form of elongated cuts extending, at least on the average, substantially in the direction of length or width of the plywood board 100. Moreover, when, in such a case, the grains of the veneer sheets are skewed, they are cut by the incisions, as indicated in Fig. 2c for the first primary core veneer sheet 231 and the first secondary core veneer sheet 241.

It has been found that the skewness of the grains affects warping in particular when a skewness of the veneer sheet is at least three degrees. Thus, in the claimed invention, a core veneer layer (231, 232, 233, 241, 242) that has been incised (i.e. comprises incisions I) has a grain direction that forms an angle β1 of from 3 to 87 degrees with a direction DL of the length L of the plywood board 100. For example, in Fig. 2c, the angle β1 remains in between the grain direction G241 and a direction DL of length L. As this angle is 3 to 87 degrees, an angle in between the grain direction G241 and a direction DW of the width W is also 3 to 87 degrees, because a direction DW of the width W is perpendicular to the direction DL length L. In the experiments (see below) the effect of incising was tested also for a skewness of five degrees.

Moreover, preferably in such a case each incision I has a shape of an elongated cut that extends the most in a longitudinal direction DI of the incision I (i.e. cut) in question. Furthermore, an average of the longitudinal directions DI of the incisions is parallel to the direction DL of the length L or the direction DW of the width W of the plywood board 100; or at least an angle β0L, β0W in between them is small. More specifically, an angle β0L between the average of the longitudinal directions DI of the cuts (i.e. incisions) and the direction DL of the length L is less than 5 degrees or an angle β0W between the average of the longitudinal directions DI of the cuts and the direction DW of the width W is less than 5 degrees. More preferable, an angle between the average of the longitudinal directions DI of the cuts (i.e. incisions) and the direction DL of the length L is less than 3 degrees or the angle between the average of the longitudinal directions DI of the cuts and the direction DW of the width W is less than 3 degrees. Preferably, the average of the longitudinal directions DI of the cuts (i.e. incisions) is parallel to the direction DL of the length L or the direction DW of the width W of the plywood board 100. Even more preferably, the longitudinal direction DI of each incision I is parallel to the direction DL of the length L or the direction DW of the width W of the plywood board 100.

However, the incisions I are preferably substantially parallel to the grain direction of the material comprising the incisions. Thus, the core veneer layer (231, 232, 233, 241, 242) that has been incised (i.e. comprises incisions I) has a grain direction that forms an angle β2 of at most eight degrees with the average of the longitudinal directions DI of the incisions I (i.e. cuts). As indicated above, it has been found that in such a case, the incisions have beneficial effect in reducing warping of the plywood board, since the grains of the core veneer have been cut. This is also beneficial from the point of view, that when all incisions are formed in the same manner, in such veneers that are not skewed, not many of the grains are cut, since the angle β2 is small.

For example, in the experiments (see Fig. 7a and the experiments below), the angle β2 between a grain direction G and a longitudinal direction DI of each one of the incisions was 5 degrees, since the incisions were parallel to each other, and parallel to the direction DW of the width W of the board. Thus, in the experiments the angle β0W was zero (see above). Moreover, the grain direction G of the incised layer formed an angle β1 of 5 degrees with the direction DW of the width W.

Referring to Fig. 1c, in a preferable embodiment, the plywood board 100 comprises at least four core veneer sheets 231, 232, 241, 242. Referring to Fig. 1d, in a more preferable embodiment, the plywood board 100 comprises at least five core veneer sheets 231, 232, 233, 241, 242. In such an embodiment, a second primary core veneer sheet 232 is arranged adjacent to the first primary core veneer sheet 231 and a second secondary core veneer sheet 242 is arranged adjacent to the first secondary core veneer sheet 241. The term "adjacent" herein means that no wooden veneers sheets has been arranged in between the adjacent veneer sheets; however, adhesive 120 has been arranged therein between.

In order to reduce warping, preferably in such an embodiment, both the second primary core veneer sheet 232 and the second secondary core veneer sheet 242 have been incised. These veneer sheets may have been incised irrespective of whether the primary core veneer sheets (231, 241) have been incised or not. However, preferably at least the four core veneer sheets closest to either one of the surface veneer sheets have been incised. Thus, preferably all of the first primary core veneer sheet 231, the second primary core veneer sheet 232, the first secondary core veneer sheet 241 and the second secondary core veneer sheet 242 have been incised.

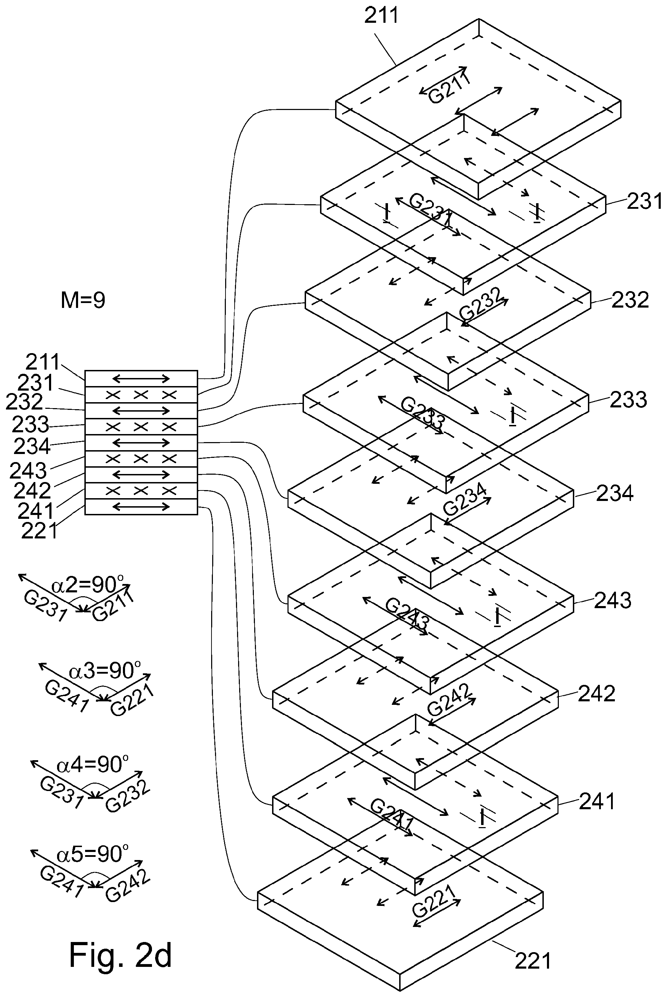

A plywood board 100 comprises a number M of veneer sheets. In Figs. 1b, 1c, 1d, and 2d the number is five, six, seven, and nine, respectively. Referring to Fig. 1d, in case the plywood board 100 comprises an odd number (2N+1, wherein N is an integer; M=2N+3 because of the two surface veneer sheets) of core veneer sheets, incising the central core veneer sheet (233) has less effect on warping than incising the other core veneer sheets. Referring to Fig. 1c, in case the plywood board 100 comprises an even number (2N, wherein N is an integer; M=2N+2 because of the two surface veneer sheets) of core veneer sheets, incising the two central core veneer sheets (232, 242) has less effect on warping than incising the other core veneer sheets.

As for the grain directions of the veneer sheets, in Figs. 1b, 1c, and 1d the hatching of the veneer sheets is related to grain direction. Hatches from up-left to low-right (in Fig. 1b the sheets 211, 232, 221) indicate a grain direction that is substantially perpendicular to a grain direction indicated by a hatching from low-left to up-right (in Fig. 1b the sheets 231, 241). What has been said above about the grain directions indicated in Fig. 2a applies for Figs. 2b, 2c, and 2d.

Referring to Fig. 2a, in an embodiment, a fourth angle α4 between a grain direction G231 of the first primary core veneer sheet 231 and a grain direction G232 of the second primary core veneer sheet 232 is at least 75 degrees, such as at least 80 degrees. As shown in Fig. 2d, a fifth angle (α5) between a grain direction G241 of the first secondary core veneer sheet 241 and a grain direction G242 of the second secondary core veneer sheet 242 is at least 75 degrees, such as at least 80 degrees.

In terms of grain directions and presence of incisions, preferably the plywood board 100 is symmetric about a central plane CP, as indicated in Figs. 1c and 1d. In such a symmetric plywood board 100, each two veneer sheets that are equally far from the central plane CP have mutually parallel grain directions (or at least substantially parallel in the meaning of an angle between their grain directions being less than 15 degrees) and both of them are either incised or free from incisions. As an example, in Fig, 1c, the surface veneer sheets 211, 221, which are equally far from the central plane CP, are free from incisions (see the symbol "NI"). Moreover, their grain directions are parallel to each other (or substantially parallel, as indicated by the first angle α1). Moreover, the first core veneer sheets (231, 241), which are equally far from the central plane CP, have been incised (see the symbol "In"). Moreover, their grain directions are parallel to each other or substantially parallel to each other. This applies also the embodiments of Fig. 1b and Fig. 1d.

Preferably, the number M of veneer sheets of the plywood board 100 is from 5 to 21, such as from 7 to 13 (including the surface veneer sheets 211, 221). Even more preferably the number is odd (i.e. 2N+3, wherein N is an integer) and from 5 to 21, such as from 7 to 13. At least the surface veneer sheets have not been incised. Preferably at least the first core veneer sheets (primary 231 and secondary 241) have been incised. Even more preferably, at least all the other core veneer sheets than the central core veneer sheet (one in case a number of the veneer sheets is odd) or two central core veneer sheets (in case a number of the veneer sheets is even) have been incised. Preferably only M-2 or M-3 of them have been incised, when M is odd (i.e. all other than the surface veneer sheets, optionally not incising the central core veneer sheet). When M is even, only M-2 or M-4 of the veneer sheets have been incised (i.e. all other than the surface veneer sheets, optionally not incising the two central core veneer sheets). Given in proportion, preferably from 10 % to 90 % of the veneer sheets of the plywood board 100 have been incised.

One possibility is to incise the material of each such veneer sheet, of which grain direction is substantially perpendicular to the grain direction of a surface veneer sheet. For example, if the plywood board is cross-laminated throughout and comprises an odd number of veneer sheets, every second core veneer sheet may be incised. In such a scenario, less than 50 % of the veneer sheets would be incised.

Thus, in an embodiment of the method or the plywood board, the material of each such core veneer layer (231, 241, 233, 243), of which wood material has a grain direction (G231, G241, G233, G243) that forms an angle of at least 75 degrees with the grain direction of the primary surface veneer sheet 211, has been incised. This has the beneficial effect that when constructing the preform 350 for the plywood board, the veneer sheets that have a grain direction that is substantially parallel to a grain direction of a surface veneer are typically taken from a first stack, while the veneer sheets that have a grain direction that is substantially perpendicular to a grain direction of a surface veneer (in the meaning defined above) are typically taken from a second stack. Thus, all the veneer sheets of the second stack may have been incised, which simplifies the manufacturing process. Referring to Fig. 2d, which shows a plywood board having seven core veneer layers 231, 232, 233, 234, 243, 242, 241 (i.e. M=9), the plywood board may be e.g. cross-laminated, whereby every second core veneer sheet (starting from the first primary core veneer sheet 231) may be incised.

Correspondingly, in an embodiment, only the aforementioned (substantially perpendicular) veneer sheets have been incised. Thus, in an embodiment, the material of each such core veneer layer (232, 242), of which wood material has a grain direction (G232, G242) that forms an angle of at most 15 degrees with the grain direction of the primary surface veneer sheet 211, has not been incised. This has the beneficial effect that when constructing the preform 350 for the plywood board as detailed above, none of the veneer sheets of the first stack need to be incised. This further simplifies the manufacturing process. Referring to Fig. 2d, therein none of every second core veneer sheet (starting from the second primary core veneer sheet 232) is incised.

However, as detailed in Fig. 1c, the plywood board need not be cross-laminated throughout, whereby the veneer sheets having the aforementioned orientations would not be every second veneer sheets. For example, in Fig. 1c, the veneer sheets 232 and 242 are adjacent veneer sheets and have a grain direction that is substantially parallel to a grain direction of a surface veneer 211, whereby, in the aforementioned scenario, these veneer sheets would not be incised.

As for manufacturing the plywood board 100, reference is made to Figs. 3a to 3f. In general, veneer sheets 200 are being produced, and by gluing these together, the plywood board 100 is obtained. Hereinbelow the term veneer sheet and the reference numeral 200 relate to both core veneer sheets (231, 232, 241, 242) and surface veneer sheets 211, 221.

Referring to Figs. 3a to 3f, a method for manufacturing the plywood board 100 comprises peeling a first veneer web 311 from a first log 301 with a first veneer lathe 302 comprising a knife 304. The first veneer web 311 is used to form at least a veneer sheet 200 of the plywood board 100. Even if not shown in a separate figure, the method comprises peeling a second veneer web 411 from a second log 401 with the first veneer lathe 302 or a second veneer lathe. Producing the first veneer web 311 from the first log 301 is indicated in Fig. 3b. Producing the second veneer web 411 from the second log 401 is indicated in Fig. 3b. The second veneer web 411 may be processed in a similar way as the first veneer web 311 to produce veneer sheets 200. Veneer sheets 200 obtained from both the first log 301 and the second log 401, and optionally sheets from further log or logs, may be used to form the plywood board 100. Veneer sheets 200 obtained from only the first log 301 may be used to form the plywood board 100. For example, it is possible to incise all the material of the first veneer web 311 and not incise any of the material of the second veneer web 411, and in this way produce both incised and un-incised veneer sheets 200. For example, it is possible to incise only a part of the material of the first veneer web 311, and in this way produce both incised and un-incised veneer sheets 200 only from the first log 301. As detailed above, the plywood board 100 comprises un-incised veneer sheets 200 (e.g. the surface veneer sheets 211, 221) and at least one incised veneer sheet (i.e. a core veneer sheet 231, 232, 241, 242, 233).

Thus, the method comprises incising at least a part of the material of the first veneer web 311. The term "material of the first veneer web" refers to the material irrespective of whether it is in the form of the veneer web 311 or whether it is in the form of veneer sheets 200, which are cut from the veneer web(s). As detailed below, the method thus comprises [A] incising at least a part of the first veneer web 311 and/or [B] incising at least a part of veneer sheets 200 cut from the first veneer web 311. However, the material of the first veneer web 311 is incised only after the material has been peeled from the first log 301. A part of the material of the second veneer web 411 may be incised. If only a part of the material of the first veneer web 311 is incised, all the material of the second veneer web 411 may be incised. If incised, the material of the second veneer web 411 is incised after peeling it from the second log 401.

Referring to Fig. 3a, the material of the first veneer web 311 that is incised, may be incised after cutting ("Cutting" in Fig. 3a) the first veneer web 311 to veneer sheets 200. Thus, in the embodiment of Fig. 3a, instead of incising the veneer web 311, the material of the veneer web 311 is incised ("Incising" in Fig. 3a) when it is in the form of veneer sheets 200. Therefore, an embodiment comprises incising at least a one of the veneer sheets 200 that have been cut from the first veneer web 311.

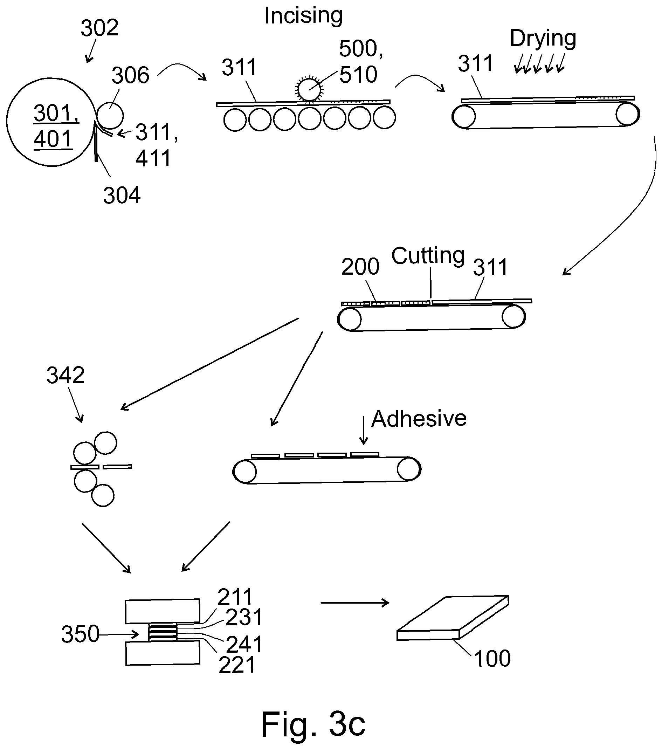

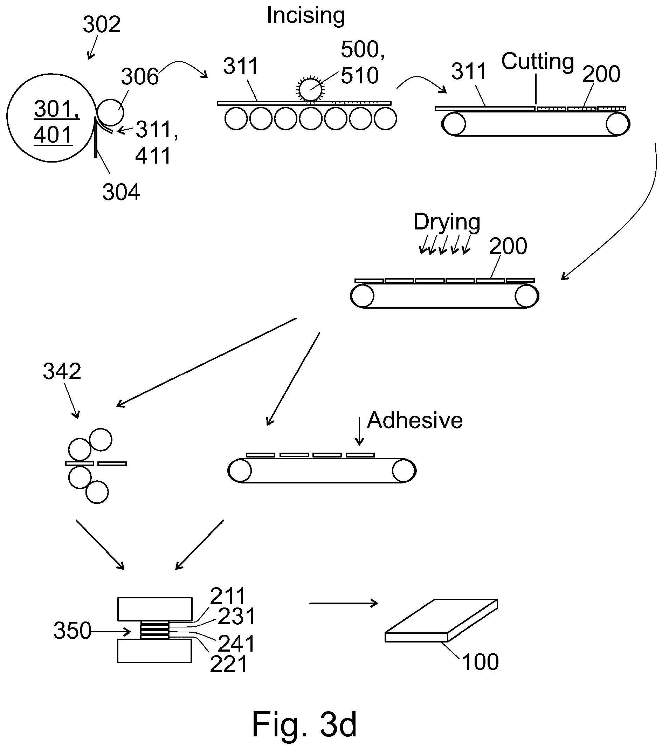

Referring to Figs. 3c and 3d, the material of the first veneer web 311 that is incised, may be incised ("Incising" in Figs. 3c and 3d) before cutting ("Cutting") the first veneer web 311 to the veneer sheets 200. Thus, in the embodiment of Figs. 3c and 3d, at least a part of the material of the first veneer web 311 is incised when it is in the form of the veneer web 311. Thus, an embodiment comprises incising at least a part of the material of the first veneer web 311 before the first veneer web 311 is cut to veneer sheets 200. Naturally, both the veneer web 311 and the sheets 200 cut therefrom may be incised subsequently (not shown).

In Figs. 3a, 3c, and 3d, the material that is incised is incised by using blades that penetrate into the wooden material to form cuts, i.e. incisions.

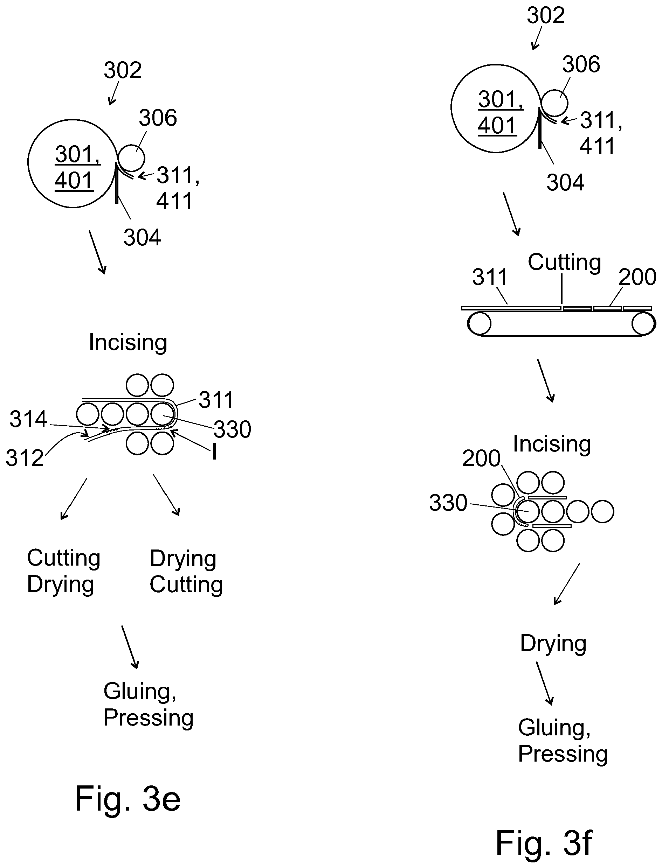

Referring to Figs. 3e and 3f, in the alternative, the material of the first veneer web 311 may be incised by bending the material to a small radius of curvature. The material of the first veneer web 311 may be bent e.g. onto a roll 330 having a radius of curvature of at most 150 mm, e.g. from 10 mm to 150 mm, and extending in a longitudinal direction, which is parallel to an axis of rotation of the roll 330 and parallel to a direction of width WWEB of the veneer web 311. This direction applies also when veneer sheets 200 are incised by bending them (Fig. 3f). For the width WWEB of the web, reference is made to Fig. 3b. Thus, the width WWEB of the veneer web corresponds to a length of the log, from which is peeled. The web may propagate in a straightforward manner, whereby the axis of rotation of the bending roll 330 may be parallel to the axis of rotation of the log, when peeled by the lathe 302. Referring to Fig. 3e, the material of the veneer web 311 may be bent before cutting the veneer web 311 to veneer sheets 200. Referring to Fig. 3f, the material of the veneer web 311 may be bent after cutting the veneer web 311 to veneer sheets 200. The veneer material is preferably bent such that a first side 312 of the material, which contains lathe checks (see Fig. 4a), remain as an inner side during incising by bending. Correspondingly, the incisions I are formed onto the outer side (see Fig. 3e). This is shown in Fig. 3e, but applies equally in Fig. 3f.

The method comprises cutting the first veneer web 311 and the second veneer web 411 to form a set of veneer sheets 200. The material of the veneer web(s) are incised and cut such that the set of veneer sheets 200 comprises veneers sheets 200 that have been incised and veneer sheets 200 that have not been incised.

The method comprises drying the material of the first veneer web 311 and the material of the second veneer web 411. Referring to Figs. 3a and 3d, the material of the first veneer web 311 may be dried after cutting the first veneer web 311 to veneer sheets 200. The veneer sheets 200 can be dried irrespective of whether the step of incising is performed to the material in the web form (as in Fig. 3d) or in the sheet form (as in Fig. 3a). Referring to Fig. 3c, the material of the first veneer web 311 may be dried before cutting the first veneer web 311 to veneer sheets 200. Referring to Figs. 3e and 3f, the order of the steps of incising, cutting, and drying may be chosen based on needs irrespective of the details of how the material is incised. However, the material of the first veneer web 311 is incised after the first veneer web 311 has been cut from the first log, and dried thereafter. I.e. the material is incised before drying. This applies also to drying of the material of the second veneer web 411.

The method comprises forming a preform 350 for a plywood board by stacking at least five veneer sheets 200 on top of each other, arranging adhesive in between the at least five veneer sheets, and hot pressing the preform 350 to form the plywood board 100. It is noted that the each one of the five veneer sheets may originate from different logs. Thus, even if the method has been discussed in context with only two logs, typically, during manufacturing a multitude of logs are peeled, and the veneer sheets are shuffled. However, since at least a part of the veneer material originating from the first log 301 is incised, at least the incised core veneer sheet (231, 232, 241, 242, 233), or at least a part (232a, 232b, 232c, 232d) thereof, is produced from the first log 301. The first log 301, the second log 401 or another log may be used for producing at least another veneer sheet (surface veneer sheet and/or core veneer sheet) of the plywood board. In addition, the first log 301 may be used for producing other veneer sheets for another plywood board or other plywood boards. If only a part of the of the veneer material originating from the first log 301 is incised, the part not incised may be used as material for one or both surface veneer sheet(s) (211, 221) of the plywood board 100 or for one or both surface veneer sheet(s) of another plywood board.

Referring to Figs. 3a, 3c, and 3d, liquid adhesive may be applied e.g. in a roll coater type applicator 342, by pouring, or by spraying onto a surface of the veneer sheets. As well known, instead of liquid adhesive, dry adhesives in the form of dry adhesive sheets can be used. As a further alternative, the adhesive may be applied as a foam. The dry veneer sheets as obtained by the process of Fig. 3e or 3f may be used in a similar way to produce the plywood board 100.

It has been found that incising does not deteriorate the mechanical properties of the plywood board 100 (e.g. strength) much, at least when the incisions do not penetrate through the material of the veneer (sheet or web). However, it has also been found that dry wood is reasonable fragile, whereby incising dry wood easily causes the incisions to penetrate through the wood material. In contrast, when the moisture content of the wood material of the veneer (sheet or web) is high, the wood material is less brittle. Therefore preferably, the material of the first veneer web 311 that is incised has a moisture content of at least 30 wt% on dry basis when incised. As detailed above, when incised, the material may be in the form of the web 311 or the sheet 200. The moisture content may be e.g. from 30 wt% to 185 wt%. Herein the unit "wt%" indicates the moisture content relative to dry matter content. For example, it has been found that a suitable moisture content for incising hardwood, such as birch, is from 60 wt% to 110 wt%. For example, it has been found that a suitable moisture content for incising softwood, such as spruce, is from 30 wt% to 185 wt%. This helps to control the depth of the incisions and to prevent them from propagating through the wood material, in this way helping to keep the strength of the veneer sheets 200 even if incised.

As detailed in the context of the plywood board 100, the surface veneer sheets 211, 221 are not incised. Therefore, an embodiment of the method comprises forming the preform 350 for the plywood board 100 from a primary surface veneer sheet 211, a secondary surface veneer sheet 221, and at least three core veneer sheets (231, 241, 232, 242, 233) such that neither the primary surface veneer sheet 211 nor the secondary surface veneer sheet 221 has been incised. The at least three core veneer sheets are arranged in between the primary surface veneer sheet 211 and the secondary surface veneer sheet 221, and at least one of the core veneer sheets has been incised. In practice, the veneer sheets 200 may be classified according to their quality, and high quality veneer sheets, which have not been incised (and may be taken from a first storage position), are used as surface veneer sheets; and lower quality veneers, which may have been incised (and may be taken from a second storage position), are used as core veneer sheets. As detailed above, the surface veneer sheets 211, 221 are preferably arranged relative to each other such that a first angle α1 between a grain direction G211 of the primary surface veneer sheet 211 and a grain direction G221 of the secondary surface veneer sheet 221 is at most 10 degrees. Reference is made to Figs. 3a, 3c, 3d, 2a, and 2b.

**In** an embodiment, a first primary core veneer sheet 231 is arranged adjacent to the primary surface veneer sheet 211, a first secondary core veneer sheet 241 is arranged adjacent to the secondary surface veneer sheet 221, and both the first primary core veneer sheet and the first secondary core veneer sheet have been incised when part of the web 311 or as veneer sheets 200 (i.e. the first core veneer sheets 231 and 241 comprise incisions). For example, incised veneer sheets may be stored in different locations than un-incised veneer sheets, and the veneer sheets needed may be taken from the appropriate location. **In** an embodiment, a second angle α2 between a grain direction G211 of the primary surface veneer sheet 211 and a grain direction G231 of the first primary core veneer sheet 231 is at least 75 degrees and a third angle α3 between a grain direction G221 of the secondary surface veneer sheet 221 and a grain direction G241 of the first secondary core veneer sheet 241 is at least 75 degrees.

**In** an embodiment, such a preform 350 is formed that the preform 350 for the plywood board 100 comprises at least four core veneer sheets (i.e. M ≥ 6), such as at least five core veneer sheets (i.e. M ≥ 7). As for the terms, a second primary core veneer sheet 232 is arranged adjacent to the first primary core veneer sheet 231 and a second secondary core veneer sheet 242 is arranged adjacent to the first secondary core veneer sheet 241. In the embodiment, the preform 350 is formed such that both the second primary core veneer sheet 232 and the second secondary core veneer sheet 242 have been incised in the meaning discussed above.

In a preferable embodiment, a fourth angle α4 between a grain direction G231 of the first primary core veneer sheet 231 and a grain direction G232 of the second primary core veneer sheet 232 is at least 75 degrees and a fifth angle α5 between a grain direction G241 of the first secondary core veneer sheet 241 and a grain direction of the second secondary core veneer sheet 242 is at least 75 degrees.

As for the total number of veneer sheets, number of incised veneer sheets and number of un-incised veneer sheets, what has been said in connection with the plywood board 100 applies in connection with the method and to the preform 350 for the plywood board 100.

As for incising veneer sheets (or only such veneer sheets) of which grain direction is substantially perpendicular to a grain direction of a surface veneer sheet, what has been said above applies in connection with the method.

As detailed above, it is possible to incise all the material of the first veneer web 311 and leave the material of the second veneer web 411 without incising. Thus, surface veneer sheets 211, 221 would be produced from the second veneer web 411 only. However, it has been found that oftentimes there is a shortage of the surface veneer sheets 211, 221, since their quality requirement is high. Oftentimes high quality veneer is only present in a middle part of a veneer web 311, 411. Therefore, incising all the material of the first veneer web 311 would incise also such material that probably has a high quality before incising. Therefore, in a preferable embodiment, only a part of the first veneer web 311 is incised. Moreover, the embodiment of the method comprises cutting the first veneer web 311 to form, from the first veneer web 311, at least a part of a veneer sheet 200 that has been incised and a veneer sheet 200 that has not been incised. Then, the veneer sheet 200 that has not been incised can be used as a surface veneer sheet 211, 221; and the veneer sheet 200 that has been incised (or a part thereof) can be used as a (part of a) core veneer sheet. However, they are not necessarily used in the same panel 100.

In the context of Figs. 3a and 3f, it is possible e.g. to incise only some of the veneer sheets 200, which have been cut from the first veneer web 311. In the context of Figs. 3c and 3d, it is possible that an incising device 500, such as an incising roll 510, is operable in two modes, wherein in a first mode the device 500 forms incisions to the material, and in a second mode the device 500 leaves the material intact. E.g. an incising roll 510 may be moved away from the veneer web 311 (e.g. lifted) not to form the incisions and brought in contact with the veneer web 311 (e.g. lowered) to form the incisions.

It is also possible to automatically detect the skewness of the veneer material, and incise the material based on a measured skewness (or at least two measured skewness values).

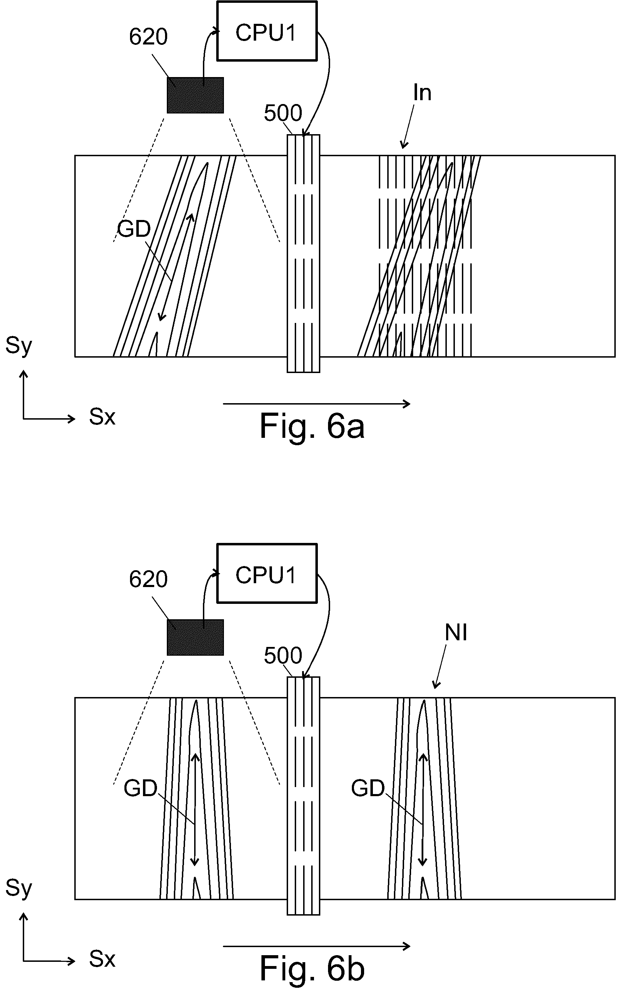

Referring to Fig. 6a, it is possibly to use a skewness detector 620 to determine a skewness of the veneer material, which in Fig. 6a is in the form of the veneer web. Thereafter, if the skewness exceeds a threshold, the veneer material may be incised, as indicated on the right hand side of Fig. 6a. The arrow from left to right indicates the direction of movement of the web. For example, if the skewness exceeds the threshold, the incising device 500 may be set to a position of incision (e.g. the roll 510 lowered, see Fig. 5a).

Referring to Fig. 6b, alternatively, it is possibly to use a skewness detector 620 to determine a skewness of the veneer material, which in Fig. 6b is in the form of the veneer web. Thereafter, if the skewness is below a threshold, the veneer material may bypass the incising device 500 or go through the incising device that is set to a mode, wherein the device 500 does not incise the material. For example, if the skewness is below the threshold, the incising device 500 may be set to a position for not incising (e.g. the roll 510 lifted, see Fig. 5a).

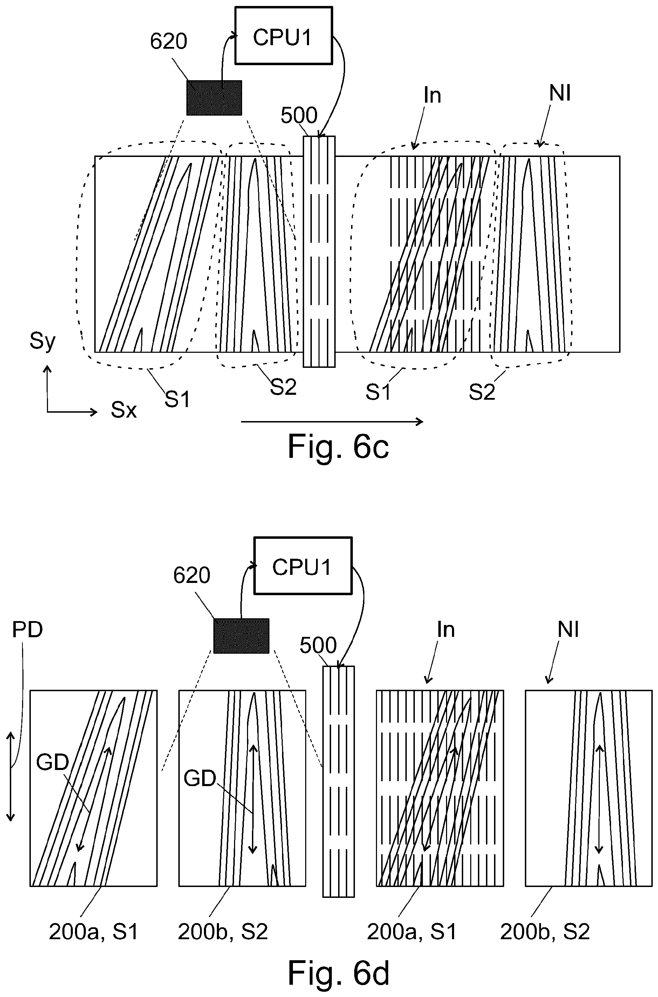

Thus, even if only one veneer lathe 302 is used, the whole veneer webs 311 receivable therefrom can be incised (Fig. 6a) or left without incisions (Fig. 6b). However, for reasons detailed above, preferably the skewness detector 620 is used to locally detect areas wherein the skewness exceeds the threshold, and the incision device 500 is configured to incise only such veneer material. Thus, in an embodiment, the skewness detector 620 is used to determine a fist skewness value from a first grain region S1 and a second skewness value from a second grain region S2; wherein the first skewness value is at least equal to a threshold and the second skewness value is less than the threshold. Then, the processor CPU1 is configured to control the incision device 500 such that the veneer material of the first grain region S1 is incised and the veneer material of the second grain region S2 is not incised, as indicated in Fig. 6c.

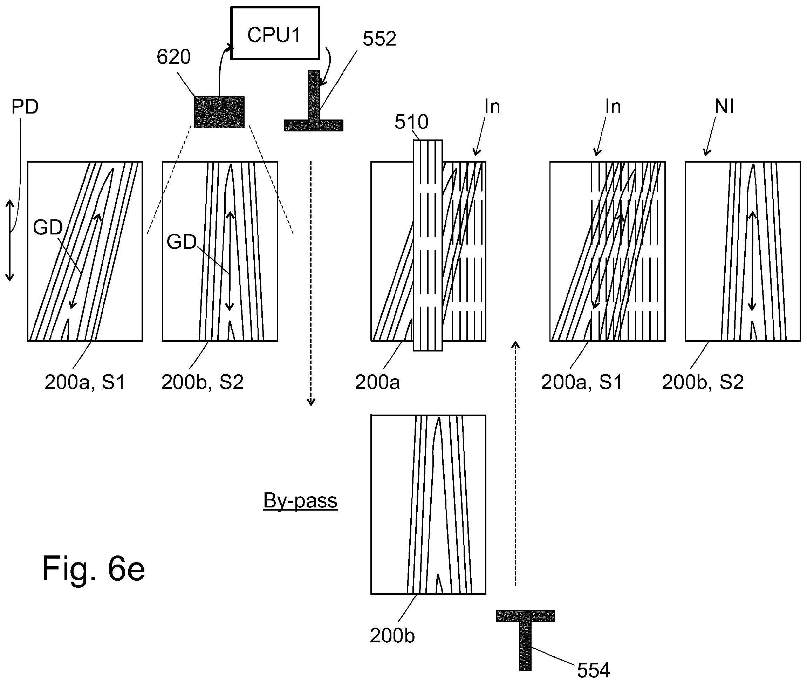

What has been said above applies *mutatis mutandis* to the embodiments, wherein the veneer material is incised after cutting to veneer sheets 200, i.e. when the veneer sheets 200 are incised. Referring to Fig. 6d, in an embodiment, a skewness detector 620 is used to determine a fist skewness value from a first veneer sheet 200a and a second skewness value from a second veneer sheet 200b; wherein the first skewness value is at least equal to a threshold and the second skewness value is less than the threshold. Then, the processor CPU1 is configured to control the incision device 500 such that the veneer material of the first veneer sheet 200a is incised and the veneer material of the second veneer sheet 200b is not incised, as indicated in Fig. 6d. As indicated in Fig. 6d, the whole first veneer sheet 200a can be called the first grain region S1, and the whole second veneer sheet 200b can be called the second grain region S2. The processor CPU1 can control the device 500 e.g. by lifting or lowering the incision roll 510. In the alternative, and with reference to Fig. 6e, the device for incising 500 may comprise a bypass passage ("by-pass") such that the veneer sheets 200 guided to the bypass passage bypass the incising part (e.g. incising roll 510) of the device 500, whereby those sheets that propagate through the bypass passage are not incised. Those sheets that should be incised are guided through the incising part (e.g. in between the rolls 510, 520) of the device 500. For example, Fig. 6e shows a first conveyor 552. The first conveyor 552 is operated by the processor CPU1 such that the first conveyor 552 conveys veneer sheets that do not comprise skewed veneer material to the bypass passage. Fig. 6e shows also a second conveyor 554 that is configured to convey the veneer sheets back to the normal process line after the incising part (e.g. the roll 510). The conveyors 552, 554 may be comprised by the device for incising 500.

Thus, an embodiment of the method comprises:
- detecting a first skewness value of veneer material from a first grain region S1, which, at the time of detecting the first skewness value, has not been incised,
- determining that the first skewness value is at least equal to a threshold, and
- after said determining, incising the veneer material of the first grain region S1.

A preferable embodiment further comprises:
- detecting a second skewness value of veneer material from a second grain region S2, which, at the time of detecting the second skewness value, has not been incised,
- determining that the second skewness value is below the threshold, and
- after said determining, deciding not to incise the material of the second grain region S2, thereby leaving the veneer material of the second grain region S2 without incisions.

In an embodiment that comprises incising the veneer material when it is the form of the veneer web 311, in the preferable embodiment of the method, the first and second grain regions S1 and S2 are different parts of the same veneer web 311.

In an embodiment that comprises incising the veneer material when it is the form of the veneer sheets 200a, 200b, in the preferable embodiment of the method, the first and second grain regions S1 and S2 may originate from different logs 301, 401.

Both these latter two options involve incising only a part of veneer material of a veneer web, which is beneficial from point of view of raw material use.

Referring to Fig. 4a, when a veneer web 311 is peeled from a log 301 using a lathe 302 comprising a knife 304, a part of a first side 312 of the veneer web 311 is in contact with the knife 304 of the lathe. Moreover, not even a part of the first side 312 is in contact with a pressure bar 306, in particular a nose (rolling a stationary) of the pressure bar 306. Correspondingly, a part of an opposite side 313, second side 313, is in contact with the pressure bar 306. Moreover, when peeling the log, the second side 313 of the veneer web forms a surface of the log 301.

Typically, the veneer web 311 is thereafter bent to a horizontal conveyor in such a way that lathe checks 314 are formed at least on the first side 312 of the veneer web 311. The lathe checks 314 already weaken the wooden material of the web 311 to some extent. It has been found that incising the material of the first veneer web 311 is more effective, when the second side 313 (i.e. the side opposite to the lathe checks 314) is incised. Therefore, an embodiment of the method comprises cutting the first veneer web 311 from the first log 301 using a lathe 302 such that the first veneer web 311 comprises a first side 312 and second side 313, wherein when the first veneer web 311 is cut, the second side 313 forms an outer surface of the primary log 301 (i.e. a part of the second surface 313 is in contact with a pressure bar 306) and the first side 312 is opposite to the second side 313. Moreover, the embodiment comprises incising at least a part of the material of the first veneer web 311 from the second side 313. As detailed above, this may be done when the material is in the form of the web 311 or in the form of the sheets 200.

As discussed above, the material of the veneer web may be incised by cutting (Figs. 3a, 3c, 3d) or by bending (Figs. 3e and 3f). Bending forms incisions mainly of the side of the material that is further away from the roll 330, while less incisions (if any) are produced onto the side contacting the roll 330 (see figs 3e and 3f). Cutting forms incisions on the side that is cut. The preferably side for incising has been shown in Fig 3e for bending, and in Fig. 5a for cutting.

It has also been found that incising by cutting (as opposed to bending) more effectively breaks the fibres of the veneer material, whereby the broken fibres no longer bend the plywood, even if they swell.

With reference to Figs. 5a and 5b, a preferable embodiment of the method comprises incising at least a part of the material of the first veneer web 311 with a tool 500 comprising at least a first blade 511 and a second blade 512 that penetrate into the material when incising the material of first veneer web 311. Even if Fig. 5a only shows the embodiment, wherein the web 311 is being incised, referring to Fig. 3a, a substantially similar tool 500 can be used to incise the material of the first veneer web 311 when the incised material is in the form of veneer sheets 200 (i.e. incising the veneer sheets 200). The blades 511, 512 preferably penetrate the veneer material from the second side 313.

As detailed above, in a preferable embodiment, only a part of the material of first veneer web 311 is incised. Thus, preferably, the incising tool 500 is configured to operate in two modes: in a first mode, wherein the material passing the tool is incised, and in a second mode, wherein the material passing the tool is not incised. E.g. in Fig. 5a, the incising roll 510 may be moved in the Sz direction to change between the operating modes. The veneer material may be supported from an opposite side by a support roll 520 or another support.

However, it has been found that such a tool is hard to realize very close to the lathe 302 or as part of the lathe 302. Thus preferable, the incising tool 500 is a different tool than the lathe 302. Naturally the tools may be fixed together. However, for these reasons, in a preferable embodiment, the first blade 511 and the second blade 512 of the incising tool 500 are arranged at least 50 cm apart from the knife 304 of the veneer lathe 302. Reference is made to Fig. 5a.

Referring to Fig. 5b, the first veneer web 311 or the veneer sheet 200 that is incised comprises, after incising, the incisions I. Such incisions are shown also in Figs. 2a and 2c. With reference to Figs. 4a and 5a, the incisions I are preferably formed on the second side 313 of the veneer web or veneer sheet. More preferably, the incisions I are formed only on the second side 313 of the veneer web or veneer sheet. For definition of the second side, see above. Veneer sheets 200 are formed from the first veneer web 311 by cutting. A size (length and width) of the veneer sheet 200 is somewhat more than the size (length L and width W, correspondingly) of the plywood board 100. Typically, after gluing, edges of the glued preform 350 are sawn to produce a finished plywood board 100. Moreover, typically, the length of a veneer sheet equals it width, and e.g. at least two plywood boards can be obtained by sawing the board obtainable from hot-pressing the preform 350.

However, in the plywood board 100, the width of the web, WWEB, may be oriented parallel to the length L of the board or the width W of the board. Moreover, a veneer sheet 200, in particular a core veneer sheet 232, may be constructed from multiple pieces, as show in Figs. 2e and 2f. In contrast, the surface veneer sheets 211 and 221 are preferably formed of only one piece of wood (each). A plywood board having a surface veneer sheet (211, 221) formed of multiple pieces may suffice (and thus may be manufactured), e.g. if the appearance is not critical. Commonly also the first (primary and secondary) core veneer sheets 231, 241 are made of one piece only, since adhesive is applied to these veneers. However, at least the other veneer sheets, e.g. the second primary core veneer sheet 232 may be made of pieces 232a and 232b, which are arranged end-to-end in the grain direction (GD) of these parts 232a, 232b as shown in Fig. 2e. Alternatively, the second primary core veneer sheet 232 may be made of pieces 232c and 232d, which are arranged side by side in the grain direction (GD) of these parts 232c, 232d, as shown in Fig. 2f. Even if only two pieces are shown, a veneer sheet or a veneer layer may be formed using even more pieces of veneer material.

Referring to Fig. 5b, the first blade 511 may have a shape of an elongated blade, whereby its length is greater than its width. This applies also to the second blade 512. In order for a single blade 511, 512 to be capable of breaking multiple fibres, the blades have at least a certain length. In Fig. 5b, the length of each blade is directed in the Sy direction. As shown by Fig. 5a, the direction Sy is also parallel to a rotational axis of the first log 301, when the first veneer web 301 is peeled by the lathe 302. However, the web 311 or the sheets 200 may be turned after peeling. Thus, in an embodiment, the first blade 511 has a length of at least 3 mm and a width that is less than the length of the first blade 511; and the second blade 512 has a length of at least 3 mm and a width that is less than the length of the second blade 512. The a length of the first and the second blade 511, 512 may be e.g. at least 5 mm or at least 10 mm. This helps cutting multiple fibres at once. For reasons of manufacturing the device 500 for incising the veneer material, a length of the first or the second blade may be less than 500 mm, such as less than 100 mm, for example as less than 50 mm or even less than 25 mm. A width of the blade 511, 512 may be e.g. at most 1/5, such as at most 1/10 or at most 1/20 of the length of the blade. For example, a width of the blade may be 0.5 mm to 3 mm (for a blade longer than 3 mm), such as 0.75 mm to 2.5 mm. As demonstrated by the experiments, a narrow blade cuts the fibres, while a wide spike could only puncture the material without actually cutting the fibres.

As detailed above, preferably at least the skewed fibres are incised. When the fibres are not skewed, i.e. they are straight, the fibre direction of the of the first log 301 and fibre direction of the first veneer web 311 are parallel to a rotational axis of the first log 301. However, in reality and commonly, some of the fibres are skewed. Therefore, during incising, at least the skewed fibres can be cut, when the blades 511, 512 are at least on the average oriented parallel to the rotational axis of the first log 301. This is shown in Figs. 5a and 5b, wherein all the blades 511, 512 are oriented in this way, i.e. a direction of the length of the blade (i.e. Sy as detailed above) is parallel to the rotational axis of the first log 301.

Figure 5b also shows a first grain region S1 of the first veneer web 311 that comprises skewed fibres. Even if not shown, the first grain region S1 that comprises skewed fibres has also been incised. For clarity, the incisions I are only shown next to the grain region S1.

Referring to Figs. 5a and 5b, in the claimed method, a rotational axis of the first log 301, from which the first veneer web 311 is cut, defines a primary direction PD for the first veneer web 311 (these directions being parallel to each other). It is noted that even if only the veneer sheets 200 are incised, the rotational axis of the first log 301, from which the first veneer web 311 is cut, defines a primary direction PD for the veneer sheet 200 that is incised, because the sheet 200 is cut from the first veneer web 311 in such a way that a length or a width of the veneer sheet 200 is parallel to the direction of width WWEB of the veneer web 311. Moreover, the primary direction PD is parallel to either a direction of a length or a direction of a width of the veneer sheet 200. The primary PD direction is parallel to the direction of the length of the sheet 200, provided that an angle between a grain direction of the veneer sheet 200 and direction of the length is less than an angle between the grain direction of the veneer sheet 200 and a direction of the width. Otherwise, the primary PD direction is parallel to the direction of the width of the sheet 200. As an example, in Fig. 6d, a primary direction PD would be the same for both the veneer sheets 200a, 200b.

Referring to Fig. 5b, in the claimed method, the first veneer web 311 or the veneer sheet 200 cut therefrom, i.e. the veneer material that in incised, comprises a first grain region S1, in which the veneer material has a grain direction GD that forms a sixth angle α6 of at least three degrees with the primary direction PD of the veneer material (web or sheet). In the plywood board, this corresponds to the angle β1 discussed above. E.g. in an embodiment, in the first grain region S1, the veneer material has a grain direction GD that forms a sixth angle α6 of at least five degrees with the primary direction PD. Thus, the threshold discussed in connection with Fig. 6c may be e.g. 2 to 6 degrees, such as 3 to 5 degrees. However, as detailed above, the skewness is typically not very high. Therefore, the sixth angle α6 may be e.g. less than eight degrees.

As detailed above, the embodiment comprises incising the material of the first grain region S1. Moreover, preferably the region S1 is incised with blades that are substantially parallel to the primary direction PD or with blades that are on the average substantially parallel to the primary direction PD.

Concerning the former and with reference to Fig. 5b, an embodiment comprises incising the material in the region S1 with such a first blade 511 that a direction DB of the length of the first blade 511 forms a seventh angle α7 of at most five degrees with the primary direction PD. The seventh angle α7 may be smaller. Preferably, the seventh angle α7 is less than 3 degrees. In Fig. 5b, the seventh angle α7 is substantially zero. Since the plywood board 100 is typically manufactured in such a way that the direction of the width WWEB of the web 311 becomes parallel with either the length L or the width W of the board, the seventh angle α7 typically equals the angle β0W or β0L defined above in connection with the board 100.

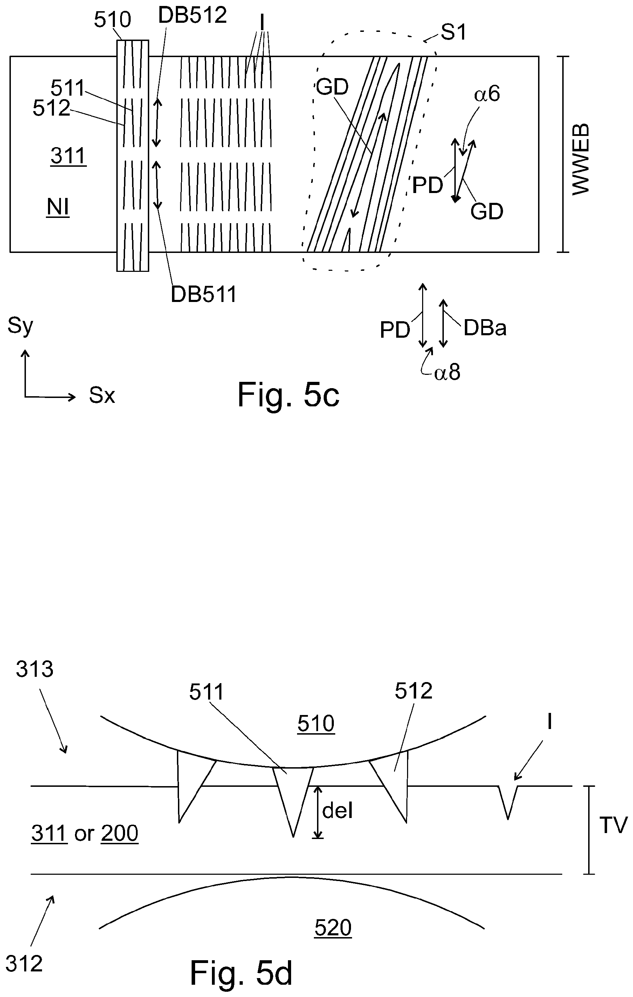

With reference to Fig. 5c, the blades 511, 512 need not be parallel. The directions of the first and second blades 511 and 512 are depicted by DB511 and DB512, respectively, in Fig. 5c. However, an average direction DBa of their lengths can be defined (e.g. as a direction of the vector that is the vector sum of the directed lengths of the blades; not directed in substantially reverse directions). Thus, an embodiment comprises incising the material in the region S1 with such a first blade 511 and a second blade 512 that an average DBa of the direction D511 of the length of the first blade 511 and the direction D512 of the length of the second blade 512 forms an eighth α8 angle of at most 5 degrees with the primary direction PD. The eighth angle α8 may be smaller. Preferably, the eighth angle α8 is less than 3 degrees. In Fig. 5c, the eighth angle α8 is substantially zero. The eighth angle α8 typically equals the angle β0W or β0L defined above in connection with the board 100

As detailed above, such blades are capable of cutting at least the skewed fibres of the first veneer web 311 or the veneer sheet 200 cut from the first veneer web 311. Such cutting reduces the tendency of warping particularly efficiently.

It has been found that an amount of the incisions affects warping and strength of the plywood board. In theory, the more incisions, the less warping of the board. However, simultaneously the strength may be lost. Therefore, preferably an amount of the incisions is from 3 000 to 15 000 per square metre of the incised material. In particular, the first grain region S1 as discussed above, may comprise 3 000/m² to 15 000/m² incisions, such as 5 000/m² to 10 000/m² incisions. In terms of total length of the incisions, a total length of the incisions may be 10 m to 200 m per square metre. In particular, the first grain region S1 as discussed above, may comprise 10/m to 200/m incisions, such as 20/m to 100/m incisions. The total length refers to a sum of the lengths of all the incisions (e.g. number of incisions times their average length).

Referring to Fig. 5b, the blades may be designed in such a way that when used for incising, a first region R1 and a second region R2 are incised, and a non-incised region NIR is left in between the first region R1 and the second region R2 in the principal direction PD. A width of the non-incised region NIR may be at least 10 mm, such as from 10 mm to 100 mm, wherein the width of the non-incised region is measured in the primary direction PD. This has two technical effects. First it ensures the strength of the veneer sheets 200, as the incisions do not extend throughout the material. Second, this helps maintenance of the incising device 500. For example, only a part of the blades 511, 512 may be replaced during maintenance, when some of the blades 511, 512 are arranged apart from other blades in the axial direction of the incising roll 510.

As indicated above, preferably the veneer web or the veneer sheet, whichever is being incised, is not incised through. When using blades 511, 512 for incising, this implies that the blades only penetrate a part of the material to be incised (web of sheet). Referring to Fig. 5d, in an embodiment at least a part of the material of the first veneer web 311 is incised such that the first blade 511 penetrates into the veneer material (i.e. first veneer web 311 or the veneer sheet 200) a depth del that is from 25 % to 80 % of the thickness TV of the veneer material (i.e. the web 311 or the sheet 200). Preferably, the depth del is from 50 % to 75 % of the thickness TV. More preferably, the first blade (and also the other blades) penetrate into the veneer material from the second side 313. These values commonly ensure that the incisions penetrate up to about the same level as the lathe checks 314, which are on the other side of the veneer material. Thus, the incisions and the lathe checks, in combination, do not, at least typically, propagate through the veneer material. This improves the integrity of the veneer sheets. However, this also breaks a sufficient amount of the fibres so as to reduce warping of the plywood board.

This can be seen also from the plywood board 100. Thus, in an embodiment of the plywood board 100, such core veneer sheets that comprise incisions comprise such incisions that do not extend through to core veneer sheet. More specifically, in an embodiment of the plywood board 100, such core veneer sheets that comprise incisions comprise incisions of which depth is from 25 % to 80 %, such as from 50 % to 75 %, of the thickness of the core veneer sheet. This may apply to all such core veneer sheets that comprise incisions.

In a plywood board made of hardwood, a thickness of a veneer sheet 200 is typically from 1.0 mm to 2.0 mm, such as from 1.3 mm to 1.8 mm. In a plywood board made of softwood, a thickness of a veneer sheet 200 is typically from 1.0 mm to 5.0 mm, such as from 1.3 mm to 4 mm. The material may be somewhat thicker when being incised than after drying. Correspondingly, in the method, a thickness of the first veneer web 311 may be from 1.0 mm to 5.0 mm, such as from 1.3 mm to 4.0 mm. More specific examples include hardwood, such as birch, wherein a thickness of the first veneer web may be 1.5 mm - 1.6 mm (when incised); as well as softwood, such as spruce, wherein a thickness of the first veneer web may be 1.5 to 4.0 mm. It has been found that the problem of the plywood board 100 warping during storage is more severe in case of hardwood plywood than in case of softwood plywood. Therefore, in an embodiment of the method, the first veneer web 311 comprises hardwood, such as ash, aspen, basswood, beech, birch, cherry, hickory, mahogany, maple, oak, poplar, lauan, teak, rosewood, okumé, or meranti; preferably birch or beech. In an embodiment of the plywood board, the first and second surface veneers 211, 221 comprise hardwood, such as ash, aspen, basswood, beech, birch, cherry, hickory, mahogany, maple, oak, poplar, lauan, teak, rosewood, okumé, or meranti; preferably birch or beech.

After drying, the veneer sheets 200a, 200b, 200c may be used in such a part of the plywood board 100 that minimizes material use. Typically, all such veneer sheets that have sufficiently high quality are used as surface veneer sheets 211, 221. The rest are used as core veneer sheets 231, 241 or to form pieces 232a, 232b, 232c, 232d of a core veneer sheet 232. Commonly adhesive 120 is applied only onto such core veneers that are made of one integral piece of wood. Thus, the veneer sheets may be classified according to their quality.

An embodiment of the method comprises determining a quality of a veneer sheet 200 using the standard EN 635-2 (1995) or EN 635-3 (1995). More precisely, an embodiment comprises determining a quality of a hardwood veneer sheet 200 using the standard EN 635-2:1995 or determining a quality of a softwood veneer sheet 200 using the standard EN 635-3:1995. The presence of incisions I affects the quality of the veneer sheet 200.

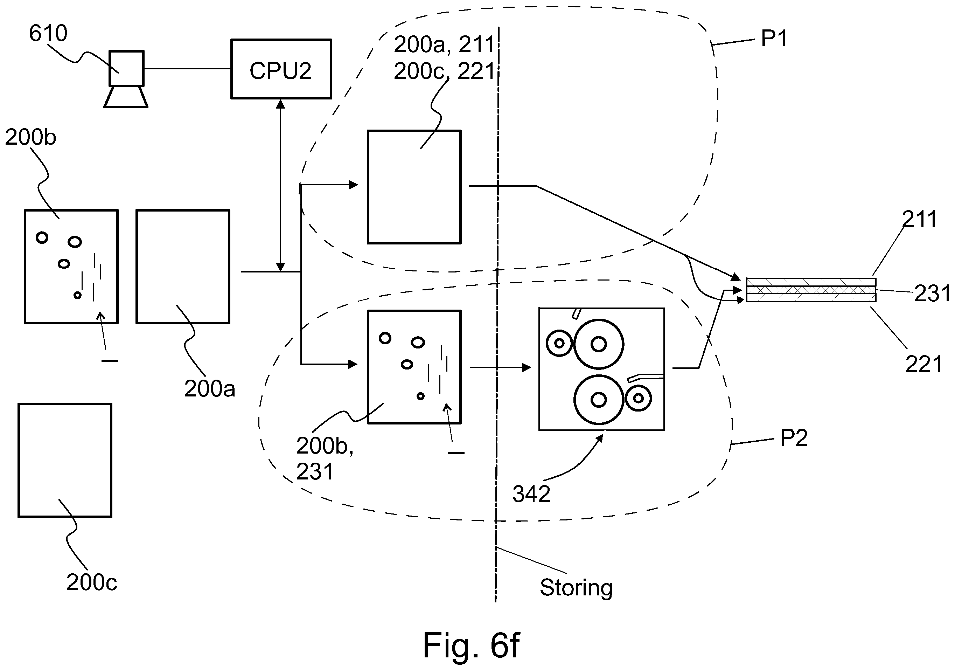

Preferably, the quality is determined automatically. Referring to Fig. 6f, in an embodiment, the quality of a veneer sheet (200a, 200b, 200c) is automatically determined using an optical detector 610 and a processor CPU2. The detector 610 may be e.g. an imaging means, such as a digital camera. From the information, the processor CPU2 determines the quality of the corresponding veneer sheet 200a, 200b, 200c. As evident, the quality refers to the quality of the individual veneer sheet. Thus, a quality is associated with each veneer sheet. Such association is done automatically by the processor CPU2.

Fig. 6f shows a roll coater type applicator 342 for applying adhesive onto a veneer sheet; however, as indicated above, alternatively another type of an applicator 342 can be used. A first passage P1 is configured to bypass the applicator 342 and a second passage P2 is for conveying the veneer sheets 200 to the applicator 342. The processor CPU2 is configured to guide veneer sheets (200a, 200c in Fig. 6) of which quality exceeds a limit to the first passage P1 and guide the other veneer sheets (200b in Fig. 6) to the second passage P2. In this way, adhesive 120 is not applied to the veneer sheets 200a, 200c guided to the first passage P1; and adhesive is applied by the applicator 342 to at least some of the veneer sheets guided to the second passage P2. As detailed above and in Figs. 3a, 3c, and 3d, a screen 344 can be used instead of a roll coater type applicator 342 to apply the adhesive 120. In this way, the first passage P1 form a bypass for the veneer sheets to pass by the application 342.

The veneer sheets that have been classified based on their quality can be stored in a storage. In particular, a first storage location may be used for storing the veneer sheets guided to the first passage P1 (i.e. the high quality veneers, e.g. surface veneers 211, 221). At least a second storage location may be used for storing the veneer sheets guided to the second passage P2 (i.e. the low quality veneers, i.e. the core veneers). Even if not shown, further quality classes can be used. E.g. the veneer conveyed to the second passage P2 may be classified as full veneers (of higher quality) and partial veneers (of lower quality), which may be used in the process differently. E.g. adhesive could be applied only onto the full veneers.

The incisions I affect the quality of the veneer sheets. In addition, e.g. knots and holes affect the quality. Knots or holes are shown on the veneer sheet 200b in Fig. 6f. The optical detector 610 and the processor CPU2 may, in combination, determine a presence of incisions on the veneer sheet 200 that is imaged by the optical detector 610. If incisions I are detected, the veneer sheet may be transferred to the second path P2, to be used as core veneer sheet or a part thereof.

Referring to Fig. 4a, the first veneer web 311 is cut from the first log 301 such that it has the first surface 312 and second surface 313, as detailed above. Moreover, as indicated is Figs. 2a and 2b, preferably the grain directions of the first and second surface veneer sheets 211, 221 are substantially the same, i.e. the first angle α1 is small, as detailed above.

In an embodiment of the method, the first veneer web 311 and/or the veneer sheets 200 cut therefrom is/are arranged on different conveyors such that the web 311 or the sheets 200 are not turned about a horizontal axis. Thus, the first side 312 faces downwards and the second side 313 faces upwards throughout the process. An arrow A is shown in Fig. 4a to indicate a direction from the first side 312 to the second side 313. Referring to Fig. 4b, when the veneer sheets are not turned upside down, all the veneer sheets 211, 231, 241, 221 are arranged to the preform 350 such that the second side 313 faces upwards, as indicated by the arrows A of the veneer sheets in Fig. 4b. When the first and second surface veneers 211, 221 have been cut from the same log, they may have substantially the same grain direction, as indicated in Fig. 4c, even if the grains are skewed.

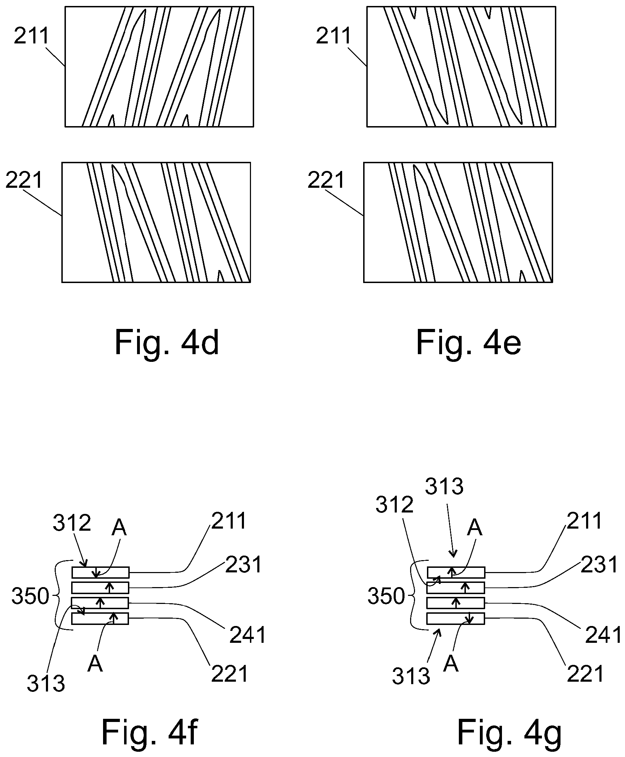

However, at least when the first and second surface veneers 211, 221 have been cut from different logs, they may have different grain directions, as indicated in Fig. 4d, at least if at least one of them comprises skewed grains. However, it has been found that in such a case, the grain directions of the surface veneer sheets 211, 221 can be made more parallel by turning the one of the surface veneer sheets 221, 221 upside down (i.e. about an axis that is comprised by the plane of the veneer sheet that is turned). For example, by turning the primary surface veneer sheet 211 of Fig. 4d upside down, the grain direction would become as shown in Fig. 4e, and the first angle α1 would be much less than in case of Fig. 4d. The result of turning the primary surface veneer sheet 211 upside down is shown also in Fig. 4f, wherein the arrow A of the sheet 211 points downwards instead of pointing upwards as in Fig. 4b.

Thus, in the embodiments related to Figs. 4b and 4f, the primary surface veneer 211 sheet comprises a first side 312 and an opposite second side 313 such that when cutting the first veneer web 311, from which the primary surface veneer sheet 211 is peeled with the lathe 302, the second side 313 of the primary surface veneer sheet 211 forms an outer side of the log (301, 401) from which the primary surface veneer sheet 211 has been peeled. Moreover, the secondary surface veneer sheet 221 comprises a first side 312 and an opposite second side 313 such that when peeling a veneer web, from which the secondary surface veneer sheet 221 is cut, with the lathe 302 or another lathe, the second side 313 of the secondary surface veneer sheet 221 an outer side of the log (301, 401) from which the secondary surface veneer sheet 221 has been peeled. The secondary surface veneer sheet 221 may be cut from the same log or from a different log than from which the primary surface veneer sheet 211 is made. It may be cut from the log or another log with the same or another lathe.

Referring to Fig. 4b, an embodiment comprises forming the preform 350 for the plywood board 100 such that the first side 312 of the primary surface veneer sheet 211 faces in the same direction as the first side 312 of the secondary surface veneer sheet 221. In addition, as indicated in Fig. 4b, the first sides of the core veneers face also in the same direction (i.e. downwards).

Referring to Figs. 4f and 4g, an embodiment comprises forming the preform 350 for the plywood board 100 such that the first side 312 of the primary surface veneer sheet 211 faces in the same direction as the second side 313 of the secondary surface veneer sheet 221. As detailed above, this typically involves turning only one of the primary surface veneer sheet 211 and the secondary surface veneer sheet 221 about an axis that is parallel to a plane of the veneer that is turned.

Referring specifically to Fig. 4f, only the primary surface veneer 211 may be turned upside down, whereby the first sides of all the other veneer sheets (231, 241, 221) face in a different direction (downwards) than the first side of the primary surface veneer 211 (upwards).

Referring specifically to Fig. 4g, only the secondary surface veneer 221 may be turned upside down, whereby the first sides of all the other veneer sheets (211, 231, 241) face in a different direction (downwards) than the first side of the secondary surface veneer 221 (upwards).

If the veneer material of the surface veneers 211, 221 is not skewed, the embodiment of Fig. 4g is most preferable, since in that case, the lathe checks 314 (see Fig. 4a), which are on the first side 312 of the veneer sheets 200, face the interior of the plywood board. Therefore, the surfaces of the plywood boards are of high quality.

For these reasons, the embodiments of Fig. 4b and 4g are most preferable. Which one is more preferable depends on skewness of the material, and how much weight is given to a quality of the surface. Naturally, the number of core veneer sheets may vary, as discussed above.

It has also been found that the incisions have a beneficial effect for the adhesive bonding of the veneer sheets to each other. It seems that the incisions increase a surface area of the veneer sheets, thereby allowing the adhesive 120 to form a stronger bond between the veneer sheets. It has been found that this effect is particularly beneficial, when liquid adhesive is used for bonding the veneer sheets 200 together.

### Experimental

The effect of incising was confirmed by comparing warping (in particular twisting) of plywood boards made without incisions, with punctures, and with incisions. In the tests, birch was peeled to form the veneer, whereby warping of birch plywood boards were tested. The birch plywood boards only comprised five veneers layers, as shown in Fig. 1b. For forming a reference panel, no veneer sheet was incised. For forming an incised plywood board, the first primary core veneer layer 231 (the layer formed by the first primary core veneer sheet 231) and the first secondary core veneer layer 241 (the layer formed by the first secondary core veneer sheet 241) were incised. For forming a punctured plywood board, the first primary core veneer layer 231 and the first secondary core veneer layer 241 were punctured. The other layers (211, 221, 232) were neither incised nor punctured.

As for the grain direction within these layers, the veneer sheets were cut in such a way that the angles of the grain direction directions relative to a direction DL of a length L of the plywood board were as follows: primary surface veneer layer 211, 0 degrees; first primary core veneer layer 231, 85 degrees; second primary core veneer layer 232, 0 degrees; first secondary core veneer layer 241, 85 degrees; and secondary surface veneer layer 221, 0 degrees (see Fig. 1b). Moreover, an angle between the grain directions of the layers 231 and 241 was 10 degrees, i.e. the 85 degrees indicated above is defined in different directions for these layers. The 85 degrees corresponds to the limits discussed for the angle β1 in connection with the plywood board 100 above. In this way, the structure of the tested plywood board resembled a fully cross-laminated plywood boards, wherein the first primary and secondary core veneer layers 231, 241 comprise veneers with a skewness of 5 degrees of the grains of the material. Moreover, such layers may have been incised or punctured (see above).

In reference plywood boards, none of the veneer layers were incised or punctured.

In an incising method, the material of the first primary and secondary core veneer layers 231, 241 was incised with blades (511, 512) that were "long" in a direction DW of width W of the plywood board and "narrow" in a perpendicular direction. A length of such a part of the blade 511 that penetrated the wood material was 3 mm and it was narrow (a width was 0.5 mm). The direction DW of width W of the plywood board was perpendicular to the direction DL of the length L of the plywood board (see above for the angles of the grain directions). Figure 7a shows the orientation of the blade 511 relative to the grain direction GD and the directions DL and DW of the length L and the width W of the plywood board, respectively. A number of the incisions was 1/cm², i.e. 10 000/m². Given the length of the blade 511, the specific length of incisions was about 30/m.

In a punctuating method, the material of first primary and secondary core veneer layers 231, 241 was punctuated with a spike that had circular cross section (see Fig. 7b). A diameter of the cross section of the spike was about 2.5 mm. A number of the punctuation was 1/cm², i.e. 10 000/m².

The plywood boards were manufactured in a hot-press process in an ordinary fashion and they were weighed.

After manufacturing the boards, they were first stored at 85 %RH and 20 °C for a week to humidify them. They were weighed, and their degree of warping was measured. Thereafter, the boards were stored at 30 %RH and 23 °C for a week to de-humidify them. During the second week they were weighed and their degree of warping was measured at the same time. Moreover, immediately after the second week they were also weighed and their degree of warping was measured.

As a degree of warping, the following measure was used: The plywood board was set on a measurement stand that consisted of three vertical equally high bars arranged on three corners of a square. Thus, the upper ends of the bars define a plane. As a measure of the degree of warping, a position (i.e. height) of the part of the plywood board at the location of the fourth corner of the square of the measurement stand was measured relative to the height of the bars of the measurement stand. This position (as measured in mm) was considered to indicate the degree of warping, since the distance indicates a deviation from planarity. A length and a width for the measurement stand (i.e. the square) was 450 mm by 450 mm. Thus, the degree of warping was of the order of 1 % to 2 % (see Table 1). While this measure for the degree of warping is not capable of measuring a degree of cupping, by the selection of the grain directions in the layers 231 and 241 (see above and Fig. 1b), the warping of the plywood boards was always of the twisting type.

Table 1 shows the results. The warping of the boards during the de-humidifying period (see above) and after the de-humidifying period (see above) are shown.

**Table 1: Effect of incising and punctuating on plywood warping**

| Punctuation type | During de-humidifying | After de-humidifying |
|---|---|---|
| None | 5.6 mm | 7.5 mm |
| Incising | 4.0 mm | 5.5 mm |
| Circular | 8.3 mm | 9.6 mm |

As can be seen from Table 1, incising the first primary and secondary veneer layers 231, 241 decreased the degree of warping by 27 %. In practice, an acceptance limit for the plywood boards could be e.g. 5 mm so that boards having a higher degree of warping are rejected. With the method, the amount of reject could thus be reduced by about 50 %, even if not directly readable from table 1.

It seems that punctuating the veneers does not reduce the warping. The inventors consider that punctuating veneer material with round spikes do dot cut the skew grains, whereby they are also after the punctuation capable of transmitting force upon drying, and thus the degree of warping is not reduced. Instead, incising, i.e. breaking the fibres e.g. by cutting (or by bending, as detailed above), makes the skew fibres incapable of transmitting internal stress.

## Claims

1. A method for manufacturing a plywood board (100), the method comprising
- peeling a first veneer web (311) from a first log (301) with a first veneer lathe (302),
- peeling a second veneer web (411) from a second log (401) with the first veneer lathe (302) or a second veneer lathe,
- after peeling the first veneer web (311), incising at least a part of the material of the first veneer web,
- drying the material of the first veneer web and the material of the second veneer web,
- cutting at least the first veneer web (311) and the second veneer web (411) to form veneer sheets (200) that have been incised and veneer sheets (200) that have not been incised,
- forming a preform (350) for a plywood board by staking at least five veneer sheets (200) and arranging adhesive (120) in between the at least five veneer sheets (200), and
- hot pressing the preform (350) to form the plywood board (100), wherein
- a rotational axis of the first log (301), from which the first veneer web (311) is peeled, defines a primary direction (PD) for the veneer material,
- the preform (350) for the plywood board comprise a primary surface veneer sheet (211), a secondary surface veneer sheet (221), and at least three core veneer sheets (231, 232, 241, 242, 233) such that
- neither the primary surface veneer sheet (211) nor the secondary surface veneer sheet (221) has been incised,
- at least one the core veneer sheets has been incised, **characterized in that**
- the veneer material that is incised comprises a first grain region (S1) in which the veneer material has a grain direction (GD) that forms a sixth angle (α6) of at least three degrees with the primary direction (PD), and
- a first angle (α1) between a grain direction of the primary surface veneer sheet (211) and a grain direction of the secondary surface veneer sheet (221) is at most 10 degrees.

2. The method claim 1, wherein
- a first primary core veneer sheet (231) is arranged adjacent to the primary surface veneer sheet (211),
- a first secondary core veneer sheet (241) is arranged adjacent to the secondary surface veneer sheet (221), and
- the material of the first primary core veneer sheet (231) has been incised and the material of the first secondary core veneer sheet (241) has been incised; preferably,
- a second angle (α2) between a grain direction of the primary surface veneer sheet (211) and a grain direction of the first primary core veneer (231) sheet is at least 75 degrees and
- a third angle (α3) between a grain direction of the secondary surface veneer sheet (221) and a grain direction of the first secondary core veneer sheet (241) is at least 75 degrees.

3. The method of claim 1 or 2 comprising
- incising only a part of the material of the first veneer web (311) and
- cutting the first veneer web (311) to form, from the first veneer web (311), a veneer sheet (200) that has been incised and a veneer sheet (200) that has not been incised.

4. The method of any of the claims 1 to 3, wherein
- a thickness of the veneer material is from 1.0 mm to 5.0 mm, and [A]
- at least a part of the material of the first veneer web is incised before the first veneer web (311) is cut to veneer sheets (200) and/or [B]
- at least a one of the veneer sheets (200) that have been cut from the first veneer web (311) is incised.

5. The method of any of the claims 1 to 4, comprising
- peeling the first veneer web (311) from the first log (301) such that the first veneer web (311) comprises a first side (312) and a second side (313), wherein when the first veneer web (311) is peeled, the second side (313) forms an outer surface of the first log (301) and the first side (312) is opposite to the second side (313), and
- incising at least a part of the material of the first veneer web (311) from second side (313).

6. The method of claim 5, comprising
- incising at least a part of the material of the first veneer web (311) only from second side (313).

7. The method of any of the claims 1 to 6, wherein
- the preform (350) for the plywood board comprises at least four core veneer sheets, such as at least five core veneer sheets,
- a second primary core veneer sheet (232) is arranged adjacent to the first primary core veneer sheet (231),
- a second secondary core veneer sheet (242) is arranged adjacent to the first secondary core veneer sheet (241), and
- the material of the second primary core veneer sheet (232) has been incised and the material of the second secondary core veneer sheet (242) has been incised;
preferably,
- a fourth angle (α4) between a grain direction of the first primary core veneer sheet (231) and a grain direction of the second primary core veneer sheet (232) is at least 75 degrees and
- an fifth angle (α5) between a grain direction of the first secondary core veneer sheet (241) and a grain direction of the second secondary core veneer sheet (242) is at least 75 degrees.

8. The method of any of the claims 1 to 7, comprising
- incising at least a part of the material of the first veneer web with a tool comprising at least a first blade (511) and a second blade (512) that, during incising, penetrate into the material of first veneer web, wherein
- the first and second blades (511, 512) are arranged at least 50 cm apart from a knife (304) of the first veneer lathe (302).

9. The method of claim 8, wherein
- at least a part of the material of the first veneer web is incised such that
- the first blade (511) penetrates into the veneer material a depth (del) that is from 25 % to 80 % of the thickness (TV) of the veneer material.

10. The method of claim 8 or 9 wherein
- the first blade (511) has a length of at least 3 mm and a width that is less than the length of the first blade,
- the second blade (512) has a length of at least 3 mm and a width that is less than the length of the second blade.

11. The method of the claim 10, wherein
- a rotational axis of the first log (301), from which the first veneer web (311) is peeled, defines a primary direction (PD) for the veneer material,
- the veneer material that is incised comprises a first grain region (S1) in which the veneer material has a grain direction (GD) that forms a sixth angle (α6) of at least three degrees with the primary direction (PD), the method comprising
- incising at least the material of the first grain region (S1) such that [A]
- a direction (DB) of the length of the first blade (511) forms a seventh angle (α7) of at most five degrees with the primary direction (PD) and/or [B]
- an average (DBa) of the direction of the length of the first blade (511) and the direction of the length of the second blade (512) forms an eighth angle (α8) of at most five degrees with the primary direction (PD).

12. The method of any of the claims 1 to 11, comprising
- detecting a first skewness value of veneer material from a first grain region (S1),
- determining that the first skewness value is at least equal to a threshold, and
- thereafter, incising the veneer material of the first grain region (S1); preferably, the method further comprises
- detecting a second skewness value of veneer material from a second grain region (S2), which has not been incised,
- determining that the second skewness value is below the threshold, and
- leaving the veneer material of the second grain region (S2) without incisions.

13. The method of any of the claims 1 to 12, wherein
- the material of the first veneer web that is incised has a moisture content of at least 30 wt% on dry basis when being incised.

14. A plywood board (100), having
- a length (L), a width (W), and a thickness (T), wherein the thickness (T) is smaller than the length (L) and smaller than the width (W), the plywood board (100) comprising
- a primary surface veneer sheet (211), a secondary surface veneer sheet (221), and at least three core veneer sheets (231, 232, 233, 241, 242) arranged in between the primary surface veneer sheet (211) and the secondary surface veneer sheet (221), wherein
- the veneer sheets have been bonded together with adhesive (120),
- at least one of the core veneer sheets (231, 232, 233, 241, 242) has been incised, and
- neither the primary surface veneer sheet (211) nor the secondary surface veneer sheet (221) has been incised, **characterized in that**
- a first angle (α1) between a grain direction (G211) of the primary surface veneer sheet (211) and a grain direction (G221) of the secondary surface veneer sheet (221) is at most 10 degrees, and
- the core veneer sheet (231, 232, 233, 241, 242) that has been incised has a grain direction (G231, G232, G241) that forms an angle (β1) of from 3 to 87 degrees with a direction (DL) of the length (L) of the plywood board (100).

15. The plywood board (100) of claim 14, wherein
- each incision (I) of the incised core veneer layer (231, 232, 233, 241, 242) has a shape of an elongated cut that extends the most in a longitudinal direction (DI) of the incision (I) in question,
- an average of the longitudinal directions of the incisions (I) [A] is parallel to the direction (DL) of length (L) or the direction (DW) of the width (W) of the plywood board (100) or [B] forms an angle (β0L) of less than 5 degrees with the direction (DL) of length (L) or [C] forms an angle (β0W) of less than 5 degrees with the direction (DW) of the width (W) of the plywood board (100), and
- the core veneer layer (231, 232, 233, 241, 242) that has been incised has a grain direction (G231, G232, G233, G241, G242) that forms an angle (β2) of less than 8 degrees with the average of the longitudinal directions of the incisions (I);
preferably,
- the longitudinal directions (DL) of the incisions (I) of the core veneer sheet (231, 232, 233, 241, 242) that has been incised are parallel to each other.

16. The plywood board of claim 14 or 15, wherein
- a first primary core veneer sheet (231) is arranged adjacent to the primary surface veneer sheet (211),
- a first secondary core veneer sheet (241) is arranged adjacent to the secondary surface veneer sheet (221), and
- the material of the first primary core veneer sheet (231) has been incised and the material of the first secondary core veneer sheet (241) has been incised; preferably,
- a second angle (α2) between a grain direction (G211) of the primary surface veneer sheet (211) and a grain direction (G231) of the first primary core veneer sheet (231) is at least 75 degrees and
- a third angle (α3) between a grain direction (G221) of the secondary surface veneer (221) and a grain direction (G241) of the first secondary core veneer (241) is at least 75 degrees.

17. The plywood board of any of the claims 14 to 16 comprising
- at least four core veneers (231, 232, 233, 241, 242), such as at least five core veneers (231, 232, 233, 241, 242), wherein
- a second primary core veneer sheet (232) is arranged adjacent to the first primary core veneer sheet (231),
- a second secondary core veneer sheet (242) is arranged adjacent to the first secondary core veneer sheet (241), and
- the material of the second primary core veneer sheet (232) has been incised and the material of the second secondary core veneer sheet (242) has been incised;
preferably,
- a fourth angle (α4) between a grain direction (G231) of the first primary core veneer sheet (231) and a grain direction (G232) of the second primary core veneer sheet (232) is at least 75 degrees and
- an fifth angle (α5) between a grain direction (G241) of the first secondary core veneer sheet (241) and a grain direction of the second secondary core veneer sheet (242) is at least 75 degrees.

18. The method of any of the claims 1 to 13 or the plywood board of any of the claims 14 to 17, wherein
- the material of each such core veneer sheet (231, 241, 233, 243), of which wood material has a grain direction (G231, G241, G233, G243) that forms an angle of at least 75 degrees with the grain direction of the primary surface veneer sheet (211), has been incised;
preferably
- the material of each such core veneer sheet (232, 242), of which wood material has a grain direction (G232, G242) that forms an angle of at most 15 degrees with the grain direction of the primary surface veneer sheet (211), has not been incised.

19. The method or the plywood board of any of the claims 1 to 18, wherein
- the primary surface veneer sheet (211) and the secondary surface veneer sheet (221) comprise hardwood, such ash, aspen, basswood, beech, birch, cherry, hickory, mahogany, maple, oak, poplar, lauan, teak, rosewood, okumé, or meranti; preferably birch or beech.

## Patentansprüche

1. Verfahren zur Herstellung einer Sperrholzplatte (100), wobei das Verfahren Folgendes umfasst
- Schälen einer ersten Furnierbahn (311) von einem ersten Stamm (301) mit einer ersten Furnierdrehmaschine (302),
- Schälen einer zweiten Furnierbahn (411) von einem zweiten Stamm (401) mit der ersten Furnierdrehmaschine (302) oder einer zweiten Furnierdrehmaschine,
- nach dem Schälen der ersten Furnierbahn (311), Einschneiden mindestens eines Teils des Materials der ersten Furnierbahn,
- Trocknen des Materials der ersten Furnierbahn und des Materials der zweiten Furnierbahn,
- Schneiden mindestens der ersten Furnierbahn (311) und der zweiten Furnierbahn (411), um Furnierblätter (200), die eingeschnitten wurden, und Furnierblätter (200), die nicht eingeschnitten wurden, zu bilden,
- Bilden eines Vorformlings (350) für eine Sperrholzplatte durch Verkleben von mindestens fünf Furnierblättern (200) und Anordnen von Klebstoff (120) zwischen den mindestens fünf Furnierblättern (200), und
- Heißpressen des Vorformlings (350) zur Bildung der Sperrholzplatte (100), wobei
- eine Rotationsachse des ersten Stammes (301), von dem die erste Furnierbahn (311) geschält wird, eine Hauptrichtung (PD) für das Furniermaterial definiert,
- der Vorformling (350) für die Sperrholzplatte ein primäres Oberflächenfurnierblatt (211), ein sekundäres Oberflächenfurnierblatt (221) und mindestens drei Kernfurnierblätter (231, 232, 241, 242, 233) umfasst, so dass
- weder das primäre Oberflächenfurnierblatt (211) noch das sekundäre Oberflächenfurnierblatt (221) eingeschnitten ist,
- mindestens eines der Kernfurnierblätter eingeschnitten wurde, **dadurch gekennzeichnet, dass**
- das eingeschnittene Furniermaterial einen ersten Faserbereich (S1) umfasst, in dem das Furniermaterial eine Faserrichtung (GD) aufweist, die einen sechsten Winkel (α6) von mindestens drei Grad mit der Hauptrichtung (PD) bildet, und
- ein erster Winkel (α1) zwischen einer Faserrichtung des primären Oberflächenfurnierblattes (211) und einer Faserrichtung des sekundären Oberflächenfurnierblattes (221) höchstens 10 Grad beträgt.

2. Verfahren nach Anspruch 1, wobei
- ein erstes primäres Kernfurnierblatt (231) angrenzend an das primäre Oberflächenfurnierblatt (211) angeordnet ist,
- ein erstes sekundäres Kernfurnierblatt (241) angrenzend an das sekundäre Oberflächenfurnierblatt (221) angeordnet ist, und
- das Material des ersten primären Kernfurnierblattes (231) eingeschnitten wurde und das Material des ersten sekundären Kernfurnierblattes (241) eingeschnitten wurde; vorzugsweise,
- ein zweiter Winkel (α2) zwischen einer Faserrichtung des primären Oberflächenfurnierblattes (211) und einer Faserrichtung des ersten primären Kernfurnierblattes (231) mindestens 75 Grad beträgt und
- ein dritter Winkel (α3) zwischen einer Faserrichtung des sekundären Oberflächenfurnierblattes (221) und einer Faserrichtung des ersten sekundären Kernfurnierblattes (241) mindestens 75 Grad beträgt.

3. Verfahren nach Anspruch 1 oder 2, welches Folgendes umfasst
- Einschneiden nur eines Teils des Materials der ersten Furnierbahn (311) und
- Schneiden der ersten Furnierbahn (311), um aus der ersten Furnierbahn (311) ein Furnierblatt (200), das eingeschnitten wurde, und ein Furnierblatt (200), das nicht eingeschnitten wurde, zu bilden.

4. Verfahren nach einem der Ansprüche 1 bis 3, wobei
- die Dicke des Furniermaterials zwischen 1,0 mm und 5,0 mm liegt, und [A]
- zumindest ein Teil des Materials der ersten Furnierbahn eingeschnitten wird, bevor die erste Furnierbahn (311) zu Furnierblättern (200) geschnitten wird und/oder [B]
- mindestens eines der Furnierblätter (200), die von der ersten Furnierbahn (311) abgeschnitten wurden, eingeschnitten wird.

5. Verfahren nach einem der Ansprüche 1 bis 4, welches Folgendes umfasst:
- Schälen der ersten Furnierbahn (311) von dem ersten Stamm (301), so dass die erste Furnierbahn (311) eine erste Seite (312) und eine zweite Seite (313) umfasst, wobei, wenn die erste Furnierbahn (311) geschält wird, die zweite Seite (313) eine Außenfläche des ersten Stammes (301) bildet und die erste Seite (312) der zweiten Seite (313) gegenüberliegt, und
- Einschneiden von mindestens einem Teil des Materials der ersten Furnierbahn (311) von der zweiten Seite (313).

6. Verfahren nach Anspruch 5, welches Folgendes umfasst:
- Einschneiden von mindestens einem Teil des Materials der ersten Furnierbahn (311) nur von der zweiten Seite (313).

7. Verfahren nach einem der Ansprüche 1 bis 6, wobei:
- der Vorformling (350) für die Sperrholzplatte mindestens vier Kernfurnierblätter umfasst, beispielsweise mindestens fünf Kernfurnierblätter,
- ein zweites primäres Kernfurnierblatt (232) angrenzend an das erste primäre Kernfurnierblatt (231) angeordnet ist,
- ein zweites sekundäres Kernfurnierblatt (242) angrenzend an das erste sekundäre Kernfurnierblatt (241) angeordnet ist, und
- das Material des zweiten primären Kernfurnierblattes (232) eingeschnitten wurde und das Material des zweiten sekundären Kernfurnierblattes (242) eingeschnitten wurde;
vorzugsweise,
- ein vierter Winkel (α4) zwischen einer Faserrichtung des ersten primären Kernfurnierblattes (231) und einer Faserrichtung des zweiten primären Kernfurnierblattes (232) mindestens 75 Grad beträgt und
- ein fünfter Winkel( α5) zwischen einer Faserrichtung des ersten sekundären Kernfurnierblattes (241) und einer Faserrichtung des zweiten sekundären Kernfurnierblattes (242) mindestens 75 Grad beträgt.

8. Verfahren nach einem der Ansprüche 1 bis 7, welches Folgendes umfasst
- Einschneiden mindestens eines Teils des Materials der ersten Furnierbahn mit einem Werkzeug, das mindestens eine erste Klinge (511) und eine zweite Klinge (512) umfasst, die beim Einschneiden in das Material der ersten Furnierbahn eindringen, wobei
- die erste und die zweite Klinge (511, 512) mindestens 50 cm von einem Messer (304) der ersten Furnierdrehmaschine (302) entfernt angeordnet sind.

9. Verfahren nach Anspruch 8, wobei
- mindestens ein Teil des Materials der ersten Furnierbahn so eingeschnitten ist, dass
- die erste Klinge (511) bis zu einer Tiefe (del) in das Furniermaterial eindringt, die zwischen 25 % und 80 % der Dicke (TV) des Furniermaterials beträgt.

10. Verfahren nach Anspruch 8 oder 9, wobei
- die erste Klinge (511) eine Länge von mindestens 3 mm hat und eine Breite aufweist, die kleiner ist als die Länge der ersten Klinge,
- die zweite Klinge (512) eine Länge von mindestens 3 mm hat und eine Breite aufweist, die kleiner ist als die Länge der zweiten Klinge,

11. Verfahren nach Anspruch 10, wobei
- eine Rotationsachse des ersten Stammes (301), von dem die erste Furnierbahn (311) geschält wird, eine Hauptrichtung (PD) für das Furniermaterial definiert,
- das eingeschnittene Furniermaterial einen ersten Faserbereich (S1) umfasst, in dem das Furniermaterial eine Faserrichtung (GD) aufweist, die einen sechsten Winkel (α6) von mindestens drei Grad mit der Hauptrichtung (PD) bildet, wobei das Verfahren Folgendes umfasst
- Einschneiden mindestens des Materials des ersten Faserbereichs (S1), so dass
[A]
- eine Richtung (DB) der Länge der ersten Klinge (511) einen siebten Winkel (α7) von höchstens fünf Grad mit der Hauptrichtung (PD) bildet und/oder
[B]
- ein Mittelwert (DBa) der Richtung der Länge der ersten Klinge (511) und der Richtung der Länge der zweiten Klinge (512) einen achten Winkel (α8) von höchstens fünf Grad mit der Hauptrichtung (PD) bildet.

12. Verfahren nach einem der Ansprüche 1 bis 11, welches Folgendes umfasst
- Erfassen eines ersten Schrägheitswertes von Furniermaterial aus einem ersten Faserbereich (S1),
- Feststellung, dass der erste Schrägheitswert mindestens gleich einem Schwellenwert ist, und
- anschließendes Einschneiden des Furniermaterials des ersten Faserbereichs (S1); vorzugsweise umfasst das Verfahren ferner Folgendes
- Erfassen eines zweiten Schrägheitswertes von Furniermaterial aus einem zweiten, nicht eingeschnittenen Faserbereich (S2),
- Feststellung, dass der zweite Schrägheitswert unter dem Schwellenwert liegt, und
- wobei das Furniermaterial des zweiten Faserbereichs (S2) ohne Einschnitte bleibt.

13. Verfahren nach einem der Ansprüche 1 bis 12, wobei
- das Material der ersten Furnierbahn, die eingeschnitten wird, beim Einschneiden einen Feuchtigkeitsgehalt von mindestens 30 Gew.-% auf Trockenbasis aufweist.

14. Sperrholzplatte (100), mit
- einer Länge (L), einer Breite (W) und einer Dicke (T), wobei die Dicke (T) kleiner als die Länge (L) und kleiner als die Breite (W) ist, wobei die Sperrholzplatte (100) Folgendes umfasst
- ein primäres Oberflächenfurnierblatt (211), ein sekundäres Oberflächenfurnierblatt (221) und mindestens drei Kernfurnierblätter (231, 232, 233, 241, 242), die zwischen dem primären Oberflächenfurnierblatt (211) und dem sekundären Oberflächenfurnierblatt (221) angeordnet sind, wobei
- die Furnierblätter mit Klebstoff (120) zusammengeklebt sind,
- mindestens eines der Kernfurnierblätter (231, 232, 233, 241, 242) eingeschnitten ist, und
- weder das primäre Oberflächenfurnierblatt (211) noch das sekundäre Oberflächenfurnierblatt (221) eingeschnitten ist, **dadurch gekennzeichnet, dass**
- ein erster Winkel (α1) zwischen einer Faserrichtung (G211) des primären Oberflächenfurnierblattes (211) und einer Faserrichtung (G221) des sekundären Oberflächenfurnierblattes (221) höchstens 10 Grad beträgt, und
- das eingeschnittene Kernfurnierblatt (231, 232, 233, 241, 242) eine Faserrichtung (G231, G232, G241) hat, die einen Winkel (β1) von 3 bis 87 Grad mit einer Richtung (DL) der Länge (L) der Sperrholzplatte (100) bildet.

15. Sperrholzplatte (100) nach Anspruch 14, wobei
- jeder Einschnitt (I) der eingeschnittenen Kernfurnierschicht (231, 232, 233, 241, 242) die Form eines länglichen Schnitts hat, der sich am weitesten in einer Längsrichtung (DI) des betreffenden Einschnitts (I) erstreckt,
- ein Mittelwert der Längsrichtungen der Einschnitte (I) [A] parallel zur Richtung (DL) der Länge (L) oder zur Richtung (DW) der Breite (W) der Sperrholzplatte (100) ist oder [B] einen Winkel (β0L) von weniger als 5 Grad mit der Richtung (DL) der Länge (L) bildet oder [C] einen Winkel (β0W) von weniger als 5 Grad mit der Richtung (DW) der Breite (W) der Sperrholzplatte (100) bildet, und
- die eingeschnittene Kernfurnierschicht (231, 232, 233, 241, 242) eine Faserrichtung (G231, G232, G233, G241, G242) aufweist, die einen Winkel (β2) von weniger als 8 Grad mit dem Durchschnitt der Längsrichtungen der Einschnitte (I) bildet;
vorzugsweise,
- die Längsrichtungen (DL) der Einschnitte (I) des eingeschnittenen Kernfurnierblattes (231, 232, 233, 241, 242) parallel zueinander verlaufen.

16. Sperrholzplatte nach Anspruch 14 oder 15, wobei
- ein erstes primäres Kernfurnierblatt (231) angrenzend an das primäre Oberflächenfurnierblatt (211) angeordnet ist,
- ein erstes sekundäres Kernfurnierblatt (241) angrenzend an das sekundäre Oberflächenfurnierblatt (221) angeordnet ist,und
- das Material des ersten primären Kernfurnierblattes (231) eingeschnitten wurde und das Material des ersten sekundären Kernfurnierblattes (241) eingeschnitten wurde; vorzugsweise,
- ein zweiter Winkel (α2) zwischen einer Faserrichtung (G211) des primären Oberflächenfurnierblattes (211) und einer Faserrichtung (G231) des ersten primären Kernfurnierblattes (231) mindestens 75 Grad beträgt und
- ein dritter Winkel (α3) zwischen einer Faserrichtung (G221) des sekundären Oberflächenfurnier (221) und einer Faserrichtung (G241) des ersten sekundären Kernfurnier (241) mindestens 75 Grad beträgt.

17. Sperrholzplatte nach einem der Ansprüche 14 bis 16, welche Folgendes umfasst
- mindestens vier Kernfurniere (231, 232, 233, 241, 242), wie mindestens fünf Kernfurniere (231, 232, 233, 241, 242), wobei
- ein zweites primäres Kernfurnierblatt (232) angrenzend an das erste primäre Kernfurnierblatt (231) angeordnet ist,
- ein zweites sekundäres Kernfurnierblatt (242) angrenzend an das erste sekundäre Kernfurnierblatt (241) angeordnet ist, und
- das Material des zweiten primären Kernfurnierblattes (232) eingeschnitten wurde und das Material des zweiten sekundären Kernfurnierblattes (242) eingeschnitten wurde;
vorzugsweise,
- ein vierter Winkel (α4) zwischen einer Faserrichtung (G231) des ersten primären Kernfurnierblattes (231) und einer Faserrichtung (G232) des zweiten primären Kernfurnierblattes (232) mindestens 75 Grad beträgt und
- ein fünfter Winkel( α5) zwischen einer Faserrichtung (G241) des ersten sekundären Kernfurnierblattes (241) und einer Faserrichtung des zweiten sekundären Kernfurnierblattes (242) mindestens 75 Grad beträgt.

18. Verfahren nach einem der Ansprüche 1 bis 13 oder die Sperrholzplatte nach einem der Ansprüche 14 bis 17, wobei
- das Material jedes solchen Kernfurnierblattes (231, 241, 233, 243), dessen Holzmaterial eine Faserrichtung (G231, G241, G233, G243) aufweist, die einen Winkel von mindestens 75 Grad mit der Faserrichtung des primären Oberflächenfurnierblattes (211) bildet, eingeschnitten wurde;
vorzugsweise
- das Material jedes solchen Kernfurnierblattes (232, 242), dessen Holzmaterial eine Faserrichtung (G232, G242) aufweist, die einen Winkel von maximal 15 Grad mit der Faserrichtung des primären Oberflächenfurnierblattes (211) bildet, nicht eingeschnitten wurde.

19. Verfahren oder die Sperrholzplatte nach einem der Ansprüche 1 bis 18, wobei
- das primäre Oberflächenfurnierblatt (211) und das sekundäre Oberflächenfurnierblatt (221) aus Hartholz bestehen, wie Esche, Espe, Linde, Buche, Birke, Kirsche, Hickorybaum, Mahagoni, Ahorn, Eiche, Pappel, Lauan, Teak, Palisander, Okumé oder Meranti; vorzugsweise Birke oder Buche.

## Revendications

1. Procédé de fabrication d'une planche de contreplaqué (100), le procédé comprenant
- le décollement d'une première couche de placage (311) d'une première bûche (301) avec une première dérouleuse (302),
- le décollement d'une seconde couche de placage (411) d'une seconde bûche (401) avec la première dérouleuse (302) ou une seconde dérouleuse,
- après avoir décollé la première couche de placage (311), l'incision d'au moins une partie du matériau de la première couche de placage,
- le séchage du matériau de la première couche de placage et du matériau de la seconde couche de placage,
- le découpage d'au moins la première couche de placage (311) et la seconde couche de placage (411) pour former des feuilles de placage (200) qui ont été incisées et des feuilles de placage (200) qui n'ont pas été incisées,
- la formation d'une préforme (350) pour une planche de contreplaqué en empilant au moins cinq feuilles de placage (200) et en agençant de l'adhésif (120) entre les au moins cinq feuilles de placage (200), et
- le pressage à chaud de la préforme (350) pour former la planche de contreplaqué (100), dans lequel
- un axe de rotation de la première bûche (301), à partir de laquelle la première couche de placage (311) est décollée, définit une direction primaire (PD) pour le matériau de placage,
- la préforme (350) de la planche de contreplaqué comprend une feuille de placage de surface primaire (211), une feuille de placage de surface secondaire (221) et au moins trois feuilles de placage centrales (231, 232, 241, 242, 233), de sorte que
- ni la feuille de placage de surface primaire (211) ni la feuille de placage de surface secondaire (221) n'ont été incisées,
- au moins une des feuilles de placage centrales a été incisée, **caractérisé en ce que**
- le matériau de placage incisé comprend une première zone de grain (S1) dans laquelle le matériau de placage présente une direction de grain (GD) qui forme un sixième angle (α6) d'au moins trois degrés avec la direction primaire (PD), et
- un premier angle (α1) entre une direction de grain de la feuille de placage de surface primaire (211) et une direction de grain de la feuille de placage de surface secondaire (221) est au maximum de 10 degrés.

2. Procédé selon la revendication 1, dans lequel
- une première feuille de placage centrale primaire (231) est agencée à côté de la feuille de placage de surface primaire (211),
- une première feuille de placage centrale secondaire (241) est agencée à côté de la feuille de placage de surface secondaire (221), et
- le matériau de la première feuille de placage centrale primaire (231) a été incisé et le matériau de la première feuille de placage centrale secondaire (241) a été incisé ; de préférence,
- un deuxième angle (α2) entre une direction de grain de la feuille de placage de surface primaire (211) et une direction de grain de la première feuille de placage centrale primaire (231) est d'au moins 75 degrés et
- un troisième angle (α3) entre une direction de grain de la feuille de placage de surface secondaire (221) et une direction de grain de la première feuille de placage centrale secondaire (241) est d'au moins 75 degrés.

3. Procédé selon la revendication 1 ou 2, comprenant
- l'incision de seulement une partie du matériau de la première couche de placage (311) et
- la découpage de la première couche de placage (311) pour former, à partir de la première couche de placage (311), une feuille de placage (200) qui a été incisée et une feuille de placage (200) qui n'a pas été incisée.

4. Procédé selon l'une quelconque des revendications 1 à 3, dans lequel
- une épaisseur du matériau de placage est comprise entre 1,0 mm et 5,0 mm, et
[A]
- au moins une partie du matériau de la première couche de placage est incisée avant le découpage de la première couche de placage (311) en feuilles de placage (200) et/ou
[B]
- au moins une des feuilles de placage (200) qui ont été coupées de la première couche de placage (311) est incisée.

5. Procédé selon l'une quelconque des revendications 1 à 4, comprenant
- le décollement de la première couche de placage (311) de la première bûche (301) de sorte que la première couche de placage (311) comprend une première face (312) et une seconde face (313), dans lequel lorsque la première couche de placage (311) est décollée, la seconde face (313) forme une surface extérieure de la première bûche (301) et la première face (312) est opposée à la seconde face (313), et
- l'incision d'au moins une partie du matériau de la première couche de placage (311) de la seconde face (313).

6. Procédé selon la revendication 5, comprenant
- l'incision d'au moins une partie du matériau de la première couche de placage (311) uniquement de la seconde face (313).

7. Procédé selon l'une quelconque des revendications 1 à 6, dans lequel
- la préforme (350) pour la planche de contreplaqué comprend au moins quatre feuilles de placage centrales, par exemple au moins cinq feuilles de placage centrales,
- une seconde feuille de placage centrale primaire (232) est agencée à côté de la première feuille de placage centrale primaire (231),
- une seconde feuille de placage centrale secondaire (242) est agencée à côté de la première feuille de placage centrale secondaire (241), et
- le matériau de la seconde feuille de placage centrale primaire (232) a été incisé et le matériau de la seconde feuille de placage centrale secondaire (242) a été incisé ;
de préférence,
- un quatrième angle (α4) entre une direction de grain de la première feuille de placage centrale primaire (231) et une direction de grain de la seconde feuille de placage centrale primaire (232) est d'au moins 75 degrés et
- un cinquième angle (α5) entre une direction de grain de la première feuille de placage centrale secondaire (241) et une direction de grain de la seconde feuille de placage centrale secondaire (242) est d'au moins 75 degrés.

8. Procédé selon l'une quelconque des revendications 1 à 7, comprenant
- l'incision d'au moins une partie du matériau de la première couche de placage à l'aide d'un outil comprenant au moins une première lame (511) et une seconde lame (512) qui, lors de l'incision, pénètrent dans le matériau de la première couche de placage, dans lequel
- les première et seconde lames (511,512) sont disposées à au moins 50 cm d'un couteau (304) de la première dérouleuse (302).

9. Procédé selon la revendication 8, dans lequel
- au moins une partie du matériau de la première couche de placage est incisée de sorte que
- la première lame (511) pénètre dans le matériau de placage à une profondeur (del) qui est de 25 % à 80 % de l'épaisseur (TV) du matériau de placage.

10. Procédé selon la revendication 8 ou 9, dans lequel
- la première lame (511) présente une longueur d'au moins 3 mm et une largeur inférieure à la longueur de la première lame,
- la seconde lame (512) présente une longueur d'au moins 3 mm et une largeur inférieure à la longueur de la seconde lame.

11. Procédé selon la revendication 10, dans lequel
- un axe de rotation de la première bûche (301), à partir de laquelle la première couche de placage (311) est décollée, définit une direction primaire (PD) pour le matériau de placage,
- le matériau de placage incisé comprend une première zone de grain (S1) dans laquelle le matériau de placage présente une direction de grain (GD) formant un sixième angle (α6) d'au moins trois degrés avec la direction primaire (PD), le procédé comprenant
- l'incision d'au moins le matériau de la première zone de grain (S1) de sorte que
[A]
- une direction (DB) de la longueur de la première lame (511) forme un septième angle (α7) d'au plus cinq degrés avec la direction primaire (PD) et/ou
[B]
- une moyenne (DBa) de la direction de la longueur de la première lame (511) et de la direction de la longueur de la seconde lame (512) forme un huitième angle (α8) d'au plus cinq degrés avec la direction primaire (PD).

12. Procédé selon l'une quelconque des revendications 1 à 11, comprenant
- la détection d'une première valeur d'asymétrie du matériau de placage à partir d'une première région de grain (S1),
- la détermination selon laquelle la première valeur d'asymétrie est au moins égale à un seuil, et
- ensuite, l'incision du matériau de placage de la première zone de grain (S1) ; de préférence, le procédé comprend également
- la détection d'une seconde valeur d'asymétrie du matériau de placage provenant d'une seconde zone de grain (S2), qui n'a pas été incisée,
- la détermination selon laquelle la seconde valeur d'asymétrie est inférieure au seuil, et
- le fait de laisser le matériau de placage de la seconde zone de grain (S2) sans incisions.

13. Procédé selon l'une quelconque des revendications 1 à 12, dans lequel
- le matériau de la première couche de placage qui est incisé présente une teneur en humidité d'au moins 30 % en poids sur base sèche au moment de l'incision.

14. Planche de contreplaqué (100), présentant
- une longueur (L), une largeur (W) et une épaisseur (T), dans laquelle l'épaisseur (T) est inférieure à la longueur (L) et à la largeur (W), la planche de contreplaqué (100) comprenant
- une feuille de placage de surface primaire (211), une feuille de placage de surface secondaire (221) et au moins trois feuilles de placage centrales (231, 232, 233, 241, 242) agencées entre la feuille de placage de surface primaire (211) et la feuille de placage de surface secondaire (221), dans laquelle
- les feuilles de placage ont été liées ensemble avec un adhésif (120),
- au moins une des feuilles de placage centrales (231, 232, 233, 241, 242) a été incisée, et
- ni la feuille de placage de surface primaire (211) ni la feuille de placage de surface secondaire (221) n'ont été incisées, **caractérisée en ce que**
- un premier angle (α1) entre une direction de grain (G211) de la feuille de placage de surface primaire (211) et une direction de grain (G221) de la feuille de placage de surface secondaire (221) est au maximum de 10 degrés, et
- la feuille de placage centrale (231, 232, 233, 241, 242) qui a été incisée présente une direction de grain (G231, G232, G241) qui forme un angle (β1) de 3 à 87 degrés avec une direction (DL) de la longueur (L) de la planche de contreplaqué (100).

15. Planche de contreplaqué (100) selon la revendication 14, dans laquelle
- chaque incision (I) de la couche de placage centrale incisée (231, 232, 233, 241, 242) présente la forme d'une coupe allongée qui s'étend le plus dans une direction longitudinale (DI) de l'incision (I) en question,
- une moyenne des directions longitudinales des incisions (I) [A] est parallèle à la direction (DL) de longueur (L) ou à la direction (DW) de la largeur (W) de la planche de contreplaqué (100) ou [B] forme un angle (β0L) inférieur à 5 degrés avec la direction (DL) de la longueur (L) ou [C] forme un angle (β0W) inférieur à 5 degrés avec la direction (DW) de la largeur (W) de la planche de contreplaqué (100), et
- la couche de placage centrale (231, 232, 233, 241, 242) qui a été incisée présente une direction de grain (G231, G232, G233, G241, G242) qui forme un angle (β2) inférieur à 8 degrés avec la moyenne des directions longitudinales des incisions (I) ;
de préférence,
- les directions longitudinales (DL) des incisions (I) de la feuille de placage centrale (231, 232, 233, 241, 242) qui a été incisée sont parallèles entre elles.

16. Planche de contreplaqué selon la revendication 14 ou 15, dans laquelle
- une première feuille de placage centrale primaire (231) est agencée à côté de la feuille de placage de surface primaire (211),
- une première feuille de placage centrale secondaire (241) est agencée à côté de la feuille de placage de surface secondaire (221), et
- le matériau de la première feuille de placage centrale primaire (231) a été incisé et le matériau de la première feuille de placage centrale secondaire (241) a été incisé ; de préférence,
- un deuxième angle (α2) entre une direction de grain (G211) de la feuille de placage de surface primaire (211) et une direction de grain (G231) de la première feuille de placage centrale primaire (231) est d'au moins 75 degrés et
- un troisième angle (α3) entre une direction de grain (G221) du placage de surface secondaire (221) et une direction de grain (G241) du premier placage centrale secondaire (241) est d'au moins 75 degrés.

17. Planche de contreplaqué selon l'une quelconque des revendications 14 à 16 comprenant
- au moins quatre placages centraux (231, 232, 233, 241, 242), tels qu'au moins cinq placages centraux (231, 232, 233, 241, 242), dans laquelle
- une seconde feuille de placage centrale primaire (232) est agencée à côté de la première feuille de placage centrale primaire (231),
- une seconde feuille de placage centrale secondaire (242) est agencée à côté de la première feuille de placage centrale secondaire (241), et
- le matériau de la seconde feuille de placage centrale primaire (232) a été incisé et le matériau de la seconde feuille de placage centrale secondaire (242) a été incisé ;
de préférence,
- un quatrième angle (α4) entre une direction de grain (G231) de la première feuille de placage centrale primaire (231) et une direction de grain (G232) de la seconde feuille de placage centrale primaire (232) est d'au moins 75 degrés et
- un cinquième angle (α5) entre une direction de grain (G241) de la première feuille de placage centrale secondaire (241) et une direction de grain de la seconde feuille de placage centrale secondaire (242) est d'au moins 75 degrés.

18. Procédé selon l'une quelconque des revendications 1 à 13 ou planche de contreplaqué selon l'une quelconque des revendications 14 à 17, dans lequel
- le matériau de chaque feuille de placage centrale (231, 241, 233, 243), dont le matériau en bois présente une direction de grain (G231, G241, G233, G243) qui forme un angle d'au moins 75 degrés avec la direction de grain de la feuille de placage de surface primaire (211), a été incisé ;
de préférence
- le matériau de chaque feuille de placage centrale (232, 242), dont le matériau en bois présente une direction de grain (G232, G242) qui forme un angle d'au plus 15 degrés avec la direction de grain de la feuille de placage de surface primaire (211), n'a pas été incisé.

19. Procédé ou planche de contreplaqué selon l'une quelconque des revendications 1 à 18, dans lequel
- la feuille de placage de surface primaire (211) et la feuille de placage de surface secondaire (221) comprennent du bois dur, tel que le frêne, le tremble, le tilleul, le hêtre, le bouleau, le cerisier, le caryer, l'acajou, l'érable, le chêne, le peuplier, le lauan, le teck, le palissandre, l'okumé ou le meranti ; de préférence du bouleau ou du hêtre.
